# EUROPEAN PATENT SPECIFICATION

(11) **EP 2 581 974 B1**
(45) Date of publication and mention of the grant of the patent: **26.04.2017**
(21) Application number: 12187961.3
(22) Date of filing: 10.10.2012
(51) Int. Cl.: H01M 8/06, H01M 8/04

(54) **Fuel cell system**
Brennstoffzellensystem
Système de pile à combustible

(30) Priority: 11.10.2011 JP 2011223775
(43) Date of publication of application: 17.04.2013
(73) Proprietor: AISIN SEIKI KABUSHIKI KAISHA, Kariya-shi, Aichi 448-8650 (JP); TOYOTA JIDOSHA KABUSHIKI KAISHA, Toyota-shi, Aichi-ken, 471-8571 (JP)
(72) Inventor: Ohkawara, Hiroki, Kariya-shi, Aichi 448-8650 (JP); Yasuhara, Kenichiro, Osaka-shi, Osaka (JP); Iwata, Shin, Osaka-shi, Osaka (JP)
(74) Representative: TBK

(56) References cited:
- EP-A2- 2 487 741
- JP-A- 2010 260 772

## Description

### TECHNICAL FIELD

This disclosure generally relates to a fuel cell system.

### BACKGROUND DISCUSSION

A known fuel cell system includes a fuel cell having an anode to which anode gas is supplied and a cathode to which cathode gas is supplied, a reformer for forming the anode gas by reforming source gas, a source gas passage for supplying the source gas to the reformer, a gas conveying source provided at the source gas passage and supplying the source gas to the reformer via the source gas passage, and a desulfurizer provided at the source gas passage and desulfurizing the source gas.

For example, JP2006-008459A (i.e., hereinafter referred to as Patent reference 1) discloses a known fuel cell system in which a first desulfurizer (normal temperature, filled with adsorption desulfurization agent) and a second desulfurizer (hydrodesulfurizer) are arranged in series. A piping diverged at a downstream of a shift portion of a reformer is connected to the first desulfurizer and the second desulfurizer to be arranged therebetween, and mixed gas of the source gas and hydrogen is supplied to the second desulfurizer. According to the construction of Patent reference 1, a timing for the replacement of the desulfurizer is determined on the basis of a cumulative flow rate of source gas.

A dew point of the source gas largely influences on a performance of the desulfurization agent (particularly, adsorption desulfurization agent) in the desulfurizer. The higher the dew point of the source gas is, the higher humidity and water vapor content included in the source gas become, thus deteriorating the performance of the desulfurizer. Water may enter into a gas piping due to plumbing for gas piping or deterioration of the gas piping due to aging degradation. Further, water may temporarily enter the gas piping during the rainy season or the season of melting snow. Once the rainy season or the season of melting snow ends, generally, the dew point of the source gas returns to the normal level. However, the dew point of the source gas flowing into the desulfurizer via the gas piping and the source gas passage may rise because of the temporal ingress of the water to the gas piping. In those circumstances, the desulfurizer may be spoiled, or the desulfurization capacity of the desulfurization agent is impaired before reaching the original remaining lifetime. If that is the case, sulfur compound included as odorant in the source gas may enter a reforming portion and/or a stack to deteriorate catalysts of the deforming portion and the stack.

The document JP 2010 260772 A discloses a fuel reforming apparatus which comprises a desulfurizer, a moisture detecting sensor, which is provided upstream or downstream of the desulfurizer for detecting a moisture level included in the raw fuel gas which flows into the desulfurizer or flows out of the desulfurizer, and a performance determination means for determining the performance of the desulfurizer based on the detection result of the moisture detecting sensor.

A need thus exists for a fuel cell system which favorably informs the maintenance information regarding a maintenance of a desulfurizer, for example, replacement of the desulfurizer even when there is a possibility that the water enters a gas piping because of deterioration of the gas piping due to aging, because of plumbing, or that the ingress of the water from melting snow or in the rainy seasons occurs.

### SUMMARY

In light of the foregoing, the disclosure provides a fuel cell system, which includes a fuel cell including an anode to which an anode gas is supplied and a cathode to which a cathode gas is supplied, a reformer for forming the anode gas by reforming a source gas, a source gas passage for supplying the source gas to the reformer, a gas conveying source provided at the source gas passage and supplying the source gas to the reformer via the source gas passage, a desulfurizer provided at the source gas passage for desulfurizing the source gas, a sensor detecting a physical quantity related to a dew point or a humidity of the source gas supplied to the desulfurizer, and a control portion which is configured to obtain a remaining lifetime of the desulfurizer on the basis of an information value indicating a ratio of a first physical quantity detected by the sensor to a second physical quantity detected by the sensor or a ratio of the second physical quantity to the first physical quantity, and to output maintenance information for conducting a maintenance of the desulfurizer when an end of the obtained remaining lifetime of the desulfurizer is earlier than a preset timing of next routine maintenance, wherein the first physical quantity relates to a cumulative operation time of the fuel cell system from a reference timing, and the second physical quantity relates to a cumulative operation time from the reference timing during which the source gas having a dew point equal to or higher than a predetermined level or having a humidity equal to or higher than a predetermined level is supplied via the source gas passage, and wherein the first physical quantity and the second physical quantity have physical quantities of the same unit.

Further features and advantageous modifications are shown in the dependent claims.

Accordingly, even when there is a possibility that the ingress of the water to a gas piping may occur because of the deterioration (aging degradation) of the gas piping and plumbing or even when the ingress of the water from melting snow during the springtime or the rainwater in rainy season occurs, the control portion can determine an appropriate remaining lifetime of the desulfurizer and can accurately inform the maintenance information related to the maintenance of the desulfurizer to appropriately define the maintenance timing of the desulfurizer compared to a case where the determination is made only on the basis of the first physical quantity related to the cumulative operation time of the fuel cell system.

According to the construction of the disclosure, because the source gas is not supplied to the desulfurizer during the stand-by time, the remaining lifetime of the desulfurizer can be estimated with higher precision.

According to the disclosure, even when there is a possibility that the ingress of the water to the gas piping may occur because of the deterioration (aging degradation) of the gas piping and plumbing or even when the ingress of the water from melting snow during the springtime or the rainwater in rainy season occurs, the control portion can determine the appropriate remaining lifetime of the desulfurizer and can accurately determine the maintenance timing of the desulfurizer compared to a case where the determination is made only on the basis of the first physical quantity related to the cumulative operation time of the fuel cell system.

According to the construction of the disclosure, even when there is a possibility that the ingress of the water to the gas piping may occur because of the deterioration (aging degradation) of the gas piping and plumbing or even when the ingress of the water from melting snow during the springtime or the rainwater in rainy season occurs, the control portion can favorably inform the maintenance information regarding the maintenance of the desulfurizer, can determine the appropriate remaining lifetime of the desulfurizer, and can accurately determine the maintenance timing of the desulfurizer compared to a case where the determination of the remaining lifetime of the desulfurizer is made only on the basis of the first physical quantity related to the cumulative operation time of the fuel cell system.

According to the disclosure, by an operation of the reset element, it is recognized that the maintenance of the desulfurizer is conducted.

According to the disclosure, the temperature of the source gas flowing into the flow meter which is susceptible to be affected by the heat can be declined as much as possible. In those circumstances, the problem of thermal resistance for the flow meter can be resolved. Accordingly, even if the heat retention capacity of the source gas which passes through the first desulfurizer is high, the temperature of the source gas can be lowered sufficiently by the heat radiation at the second desulfurizer.

According to the disclosure, even if the desulfurization capacity of the desulfurization agent is declined, provided that the dew point of the source gas is assumed to be the low level thereafter, it is expected that the desulfurization function of the desulfurization agent is recovered thereafter. Accordingly, the control portion modifies, or corrects the remaining lifetime of the desulfurization agent to be longer.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a schematic view of a fuel cell system according to a first embodiment disclosed here;
Fig. 2 is a graph showing remaining lifetime characteristics of source gas relative to a dew point;
Fig. 3 is a chart showing factors for making source gas have high dew point;
Fig. 4 is a graph showing remaining lifetime characteristics of source gas relative to a dew point for second and third cases (modes) in Fig. 3 according to the embodiment disclosed here;
Fig. 5 is a graph showing remaining lifetime characteristics of source gas relative to a dew point for fourth case (mode) in Fig. 3 according to the embodiment disclosed here;
Fig. 6 is a schematic view of a fuel cell system according to a third embodiment disclosed here;
Fig. 7 is a flowchart for a control law which a control portion executes according to a fourth embodiment disclosed here;
Fig. 8 is a flowchart for a control law which the control portion executes according to the fourth embodiment disclosed here;
Fig. 9 is a flowchart for a control law which a control portion executes according to a fifth embodiment disclosed here;
Fig. 10 shows data regarding a desulfurization agent remaining lifetime stored in a memory according to a sixth embodiment disclosed here; and
Fig. 11 is a schematic view showing an application of a fuel cell system according to the embodiments disclosed here.

### DETAILED DESCRIPTION

Embodiments of a fuel cell system will be explained with reference to illustrations of drawing figures as follows.

A fuel cell includes an anode to which anode gas is supplied and a cathode to which cathode gas is supplied. A reformer generates the anode gas by reforming source gas. A source gas passage is configured to supply the source gas to the reformer. A gas conveying source is provided at the source gas passage and supplies the source gas to the reformer via the source gas passage. For example, a pump, a compressor, or a fan is applied as the gas conveying source. A rotary pump, a reciprocating pump, a diaphragm pump may be, for example, applied as the pump. A desulfurizer is provided at the source gas passage and desulfurizes the source gas. A sensor detects physical quantities regarding the humidity or dew point of the source gas which is supplied to the desulfurizer. A dew point sensor or humidity sensor is, for example, applied as the sensor.

Porous material, for example, zeolite, zeolite supporting metal such as transition metal, or activated carbon may be applied as base material for the desulfurization agent contained in the desulfurizer. In many cases, the desulfurization agent includes metal such as transition metal. In those circumstances, alternatively, other than the physical adsorption (physisorption), chemical adsorption (chemisorption) may be additionally applied. At least one of silver, copper, gold, rhodium, palladium, iridium, ruthenium, osmium, nickel, iron, chromium, and molybdenum may be applied as the metal. Further, alloy including equal to or more than two of silver, copper, gold, rhodium, palladium, iridium, ruthenium, osmium, nickel, iron, chromium, and molybdenum may be applied as the metal. Zeolite is a generic term for material having porous crystal structure among aluminosilicate. In those circumstances, either natural zeolite or synthetic zeolite may be applied. The desulfurization agent removes sulfur compound (e.g., methyl melcaptan, dimethyl sulfide, dimethyl disulfide) included in the source gas.

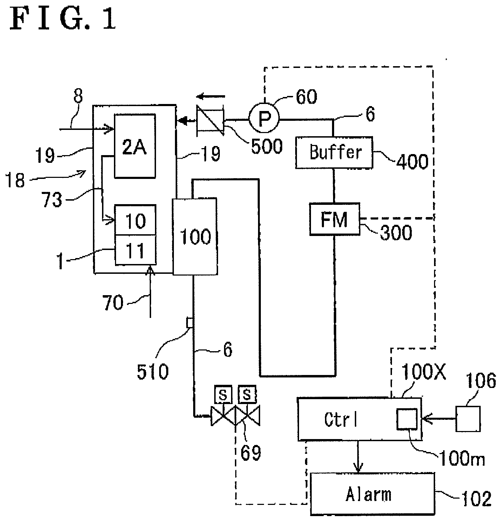

A first embodiment will be explained with reference to Figs. 1 to 5. As shown in Fig. 1, the fuel cell system includes a fuel cell 1 including an anode 10 and a cathode 11, a cathode gas passage 70 for supplying a cathode gas (i.e., a gas including oxygen, for example, from air) to the cathode 11 of the fuel cell 1, a reformer 2A generating an anode gas (i.e., gas including hydrogen or hydrogen gas) by reforming a source gas (source fuel gas), a source gas passage 6 including a pump 60 serving as a gas conveying source for supplying the desulfurized source gas to the reformer 2A, an anode gas passage (anode fluid passage) 73 for supplying the anode gas generated at the reformer 2A to the anode 10 of the fuel cell 1, and a thermal insulation wall 19 which houses the anode gas passage 73, the reformer 2A, and the fuel cell 1. An electric power generating module 18 includes the reformer 2A, the fuel cell 1, and the thermal insulation wall 19. A water supply passage 8 for supplying the water or the water vapor for reforming is connected to the reformer 2A. The reformer 2A includes an evaporating portion for generating the water vapor and a reforming portion for reforming the fuel using the water vapor.

As shown in Fig. 1, a shut-off value 69, a desulfurizer 100 containing the desulfurization agent, a flow meter 300 measuring the flowing amount (flow rate) of the source gas flowing through the desulfurizer 100 are provided in series at the source gas passage 6 from upstream to downstream in the mentioned order. The desulfurizer 100 is positioned in the relatively high temperature environment (e.g., temperature environment which is equal to or higher than 50°C and equal to or lower than 220°C). Particularly, the desulfurizer 100 is positioned either in contact with an external wall surface of the thermal insulation wall 19 or close to (adjoining) the external wall surface of the thermal insulation wall 19 so that the desulfurizer 100 receives heat (either direct heat transfer or receiving radiation heat) from the thermal insulation wall 19 of the electric power generating module 18. The desulfurizer 100 contains the desulfurization agent having a desulfurization capacity to the source gas with relatively high dew point (i.e., the desulfurization agent which is capable of desulfurizing the source gas with relatively high dew point level). For example, zeolite is applied as the desulfurization agent. Alternatively, porous material, for example, activated carbon and zeolite supporting metal, for example, silver or copper, may be applied as the desulfurization agent.

Generally, the source gas (e.g., town gas (13A)) has a low dew point (e.g., equal to or lower than 0°C to 40°C, equal to or lower than -10°C, equal to or lower than -20°C), and the volume of the water vapor included in the source gas is minute. However, due to plumbing for piping or deterioration of the gas piping due to aging or construction work, the water vapor included in the source gas may increase and there is a possibility that the source gas having high dew point (e.g., equal to or higher than +20°C dew point) is supplied. In those circumstances; the desulfurization agent may be deteriorated in a short period, thus the sulfur compound included in the source gas as the odorant may flow into the reformer 2A to decline the durability of the reformer 2A, for example. The desulfurizer 100 which is for high temperature environment (installed at high temperature environment) has (exhibits) favorable desulfurization capacity (desulfurization performance) to the source gas having a relatively high dew point. Thus, even when the source gas with high dew point is supplied, a favorable desulfurization effects, or performance can be attained.

As shown in Fig. 1, the source gas passage 6 is provided with a buffer 400 having a buffer chamber. Thus, the shut-off value 69, the desulfurizer 100, the flow meter 300, the buffer 400, and the pump 60 are provided in series at the source gas passage 6 from the upstream to the downstream in the mentioned order. The buffer 400 includes the buffer chamber corresponding to a hollow chamber. The pump 60 is configured to convey the source gas towards the reformer 2A of the electric power generating module 18 at the source gas passage 6, which possibly generates the pulsation of the pressure of the source gas. As a countermeasure, the desulfurizer 100, the flow meter 300, the buffer 400, and the pump 60 are provided in series at the source gas passage 6 in the mentioned order. In those circumstances, as shown in Fig. 1, the buffer 400 is positioned at a downstream of the flow meter 300 and at an upstream of the pump 60. That is, the buffer 400 is provided between the pump 60 which serves as a cause of the pulsation and the flow meter 300 which needs to avoid to be affected by the pulsation. According to the foregoing construction, the flow meter 300 is unlikely affected by the pulsation of the pump 60. This is advantageous for stable operation of the system. According to the foregoing construction, flow pulsation of the flow meter 300 can be restrained. Thus, an output value of the flow meter 300 is stabilized, the stability in terms of the control is ensured, and a behavior that the output value of the flow meter 300 is deviated from a true value due to the pulsation can be restrained. A check valve 500 possibly generates the pulsation of the source gas when operated. As a countermeasure, as shown in Fig. 1, because the buffer 400 is positioned between the flow meter 300 and the check valve 500 (pump 60), the flow meter 300 is unlikely affected by the pulsation caused by the pump 60 and the check valve 500. Thus, a precision for measuring the flowing amount (flow rate) of the source gas by the flow meter 300 is ensured, which is advantageous for stable operation of the system.

The desulfurizer 100 is positioned in contact with the external surface of the thermal insulation wall 19 of the electric power generating module 18 or close to the external surface of the thermal insulation wall 19 so as to receive the heat from the thermal insulation wall 19, and is maintained within a predetermined temperature range (e.g., 60°C to 220°C or 60°C to 150°C). When a cumulative operation time for an electric power generating operation of the system is assumed to be longer, the more the cumulative flowing amount of the source gas flowing through the source gas passage 6 increases, the more the desulfurizer 100 deteriorates. Further, in a case where the dew point of the source gas is high, the remaining lifetime of the desulfurizer 100 is assumed to be short because the volume of the water vapor and the water included in the source gas is significant. When the desulfurizer 100 or the desulfurization agent contained in the desulfurizer 100 is replaced at the maintenance, a reset switch (i.e., serving as a reset element) 106 is turned on, and a signal of the reset switch 106 is inputted to a control portion (i.e., also referred to as Ctrl) 100X.

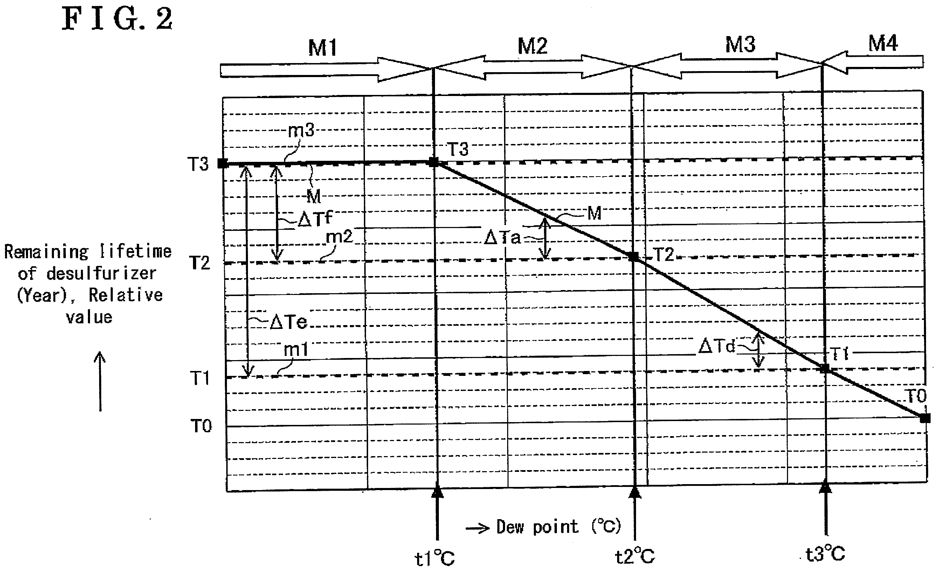

Referring to Fig. 2, timings for replacing the desulfurization agent will be explained hereinafter. Fig. 2 shows the remaining lifetime characteristics of the source gas relative to the dew point. A horizontal axis in Fig. 2 indicates the dew point of the source gas (information value related to the humidity of the source gas) which flows to the desulfurization agent. At the horizontal axis, the following relationship is established: t1 <t2< t3. A vertical axis indicates the remaining lifetime of the desulfurization agent. At the vertical axis, the following relationship is established: T0 < T1< T2 < T3. As indicated with a characteristic line M in Fig. 2, the higher the dew point is, the more the remaining lifetime of the desulfurization agent declines. This is because adsorption sites of the odorant is reduced because H₂O (water vapor) is adsorbed to the adsorption site (desorption site) of the odorant of the desulfurization agent. It is considered that the adsorption of the water vapor is determined by the adsorption equilibrium, and when the dew point of the source gas declines, the remaining lifetime of the desulfurization agent returns to the approximately original remaining lifetime in a normal state. For example, as indicated with the characteristic line M, when the source gas having the dew point of normally 20°C (equal to or higher than t3°C) flows into the desulfurization agent, the remaining lifetime of the desulfurization agent is T0 years. However, even if the source gas having the dew point of 20°C enters at the beginning of use of the system, the remaining lifetime of T3 years is attained when the dew point returns to -20°C thereafter. T1 year, T2 year, T3 year indicate relative value of time (T1 < T2 < T3), and is stored in an area of a memory 100m of the control portion 100X.

As shown in Fig. 2, a first routine maintenance m1 for the system is conducted in the T1th year. A second routine maintenance m2 for the system is conducted in the T2th year. A third routine maintenance m3 for the system is conducted in the T3th year. The maintenance is scheduled every T1 year (i.e., interval for the maintenance is T1 year). With the system according to the embodiment, the routine maintenance for various parts, for example, an air filter for cleaning the cathode gas is conducted every T1 year (T1 year cycle). Thus, the control portion 100X determines whether the replacement of the desulfurization agent is necessary at the timing of the routine maintenance m1, m2, m3, for example, based on whether the remaining lifetime of the desulfurization agent is longer than a period by the next routine maintenance (i.e., period of T1 year). In a case where the remaining lifetime of the desulfurization agent Is longer than a period by the next routine maintenance (i.e., period of T1 year), the desulfurization agent is not replaced. Accordingly, because the desulfurization agent can be replaced at the timing of the routine maintenance for the system, maintenance exclusive for the desulfurization agent can be abolished, thus reducing maintenance costs. In a case where the remaining lifetime of the desulfurization agent is shorter than a period by the next routine maintenance (i.e., period of T1 year), the control portion 100X outputs an alert for replacing the desulfurizer 100 or the desulfurization agent before the next routine maintenance. In those circumstances, first, in a case where the dew point of the source gas is equal to or lower than t1°C, because the dew point of the source gas is low, the water vapor volume of the source gas is extremely small, thus the remaining lifetime of the desulfurization agent is assumed to be long. In those circumstances, as shown as region M1 in Fig. 2, the remaining lifetime at the timing of the first routine maintenance m1 is ΔTe, which is longer than T1 year. The remaining lifetime at the timing of the second routine maintenance m2 is ΔTf, which is longer than T1 year as shown in Fig. 2. Thus, the desulfurization agent is not replaced at the timings of the first routine maintenance m1 and the second routine maintenance m2. The desulfurization agent is replaced at the timing of the third routine maintenance m3. Accordingly, the desulfurization agent is not replaced for T3 year without maintenance in a case where the dew point of the source gas is equal to or lower than t1°C. Second, in a case where the dew point of the source gas is t1°C to t2°C, the water vapor volume of the source gas is relatively large. In those circumstances, as shown as region M2 in Fig. 2, the remaining lifetime at the timing of the second routine maintenance m2 is ΔTa, which is shorter than T1 year. Because the length of the ΔTa corresponds to equal to or shorter than T1 year of the remaining lifetime, the desulfurization agent (desulfurizer 100) Is replaced at the second routine maintenance m2 although the desulfurizer 100 is not replaced at the first routine maintenance m1.

Third, in a case where the dew point of the source gas is t2°C to t3°C, the water vapor volume of the source gas is large. In those circumstances, as shown as region M3 in Fig. 2, the desulfurization agent (desulfurizer 100) is replaced at the timing of the first routine maintenance m1. This is because the remaining lifetime of the desulfurization agent is ΔTd, which is shorter than T1 year at the timing of the first routine maintenance m1. ΔTd corresponds to equal to or shorter than the remaining lifetime T1 year, and does not last until the second routine maintenance m2. Thus, the desulfurization agent is replaced at the first routine maintenance m1. Fourth, in a case where the dew point of the source gas is equal to or higher than t3°C, because the dew point of the source gas is high, the water vapor volume included in the source gas is significantly high. In those circumstances, as indicated as region M4 in Fig. 2, the desulfurizer 100 or the desulfurization agent is replaced before the first routine maintenance m1 separately.

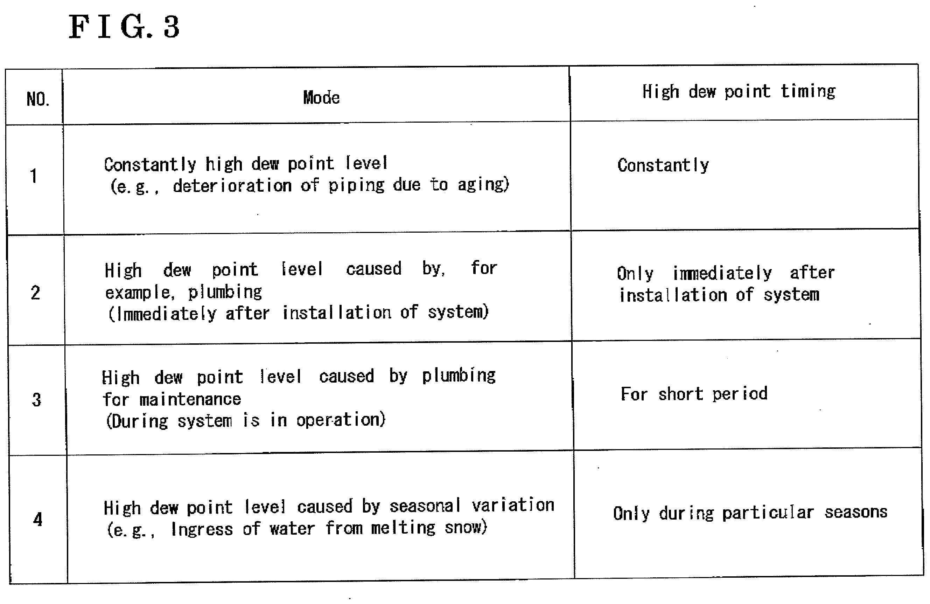

Fig. 3 shows causes that the source gas is assumed to have higher dew point compared to a normal dew point (low dew point, for example, equal to or lower than -20°C) of the source gas. No. 1 shows a first case (mode) where the source gas with normally (constantly) high dew point flows. For example, the source gas with high dew point normally (constantly) flows because of the deterioration of the gas piping. According to the first case (mode), whether the replacement of the desulfurizer 100 or the desulfurization agent is necessary is determined based on a map (graph) shown in Fig. 2.

No. 2 in Fig. 3 shows a second case (mode) where the water enters the gas piping at the beginning of the installation of the system by the plumbing for the gas piping, and where the source gas with high dew point temporarily enters the gas piping after the installation of the system until the water Is drained from the source gas passage 6. According to the second case (mode), a level of the source gas returns to the low dew point if the water is drained from the source gas passage 6. Thus, as explained above, because the remaining lifetime of the desulfurization agent returns to the original remaining lifetime level in a normal state in a case where the level of the dew point of the source gas returns to the low dew point, similar to the case where the level of the dew point is equal to or lower than t1°C, the fuel cell system, or the desulfurizer 100 can be operated without maintenance for T3 years. Thus, in a case where the level of the dew point is equal to or higher than t1°C, the maintenance can be conducted on the basis of the map (graph) shown in Fig. 2.

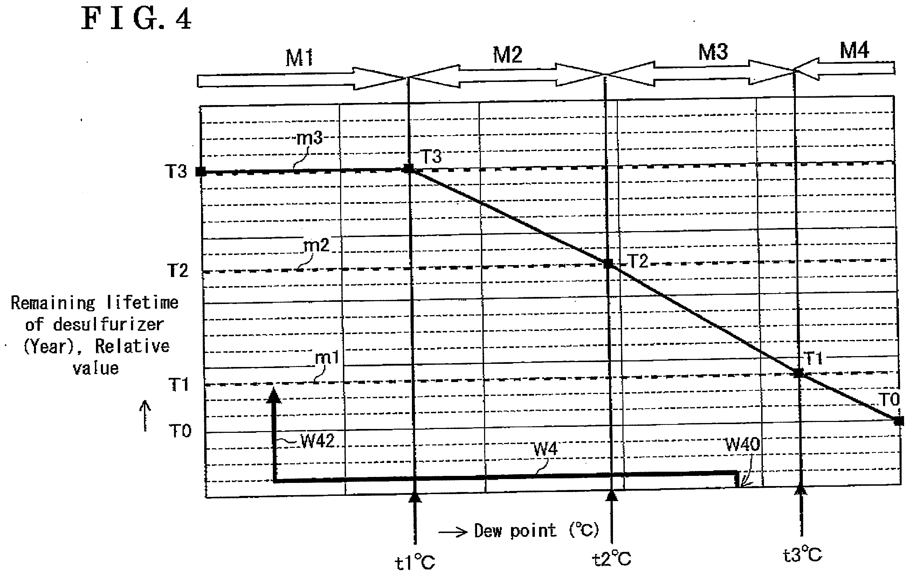

No, 3 in Fig. 3 shows a third case (mode) where the water enters the fuel cell system during the plumbing of the gas piping for a maintenance and where the source gas with high dew point enters during the operation of the fuel cell system temporarily for a short time. In a case where the level of the dew point of the source gas returns from the high dew point to the low dew point within the remaining lifetime of the desulfurization agent, the remaining lifetime of the desulfurization agent is assumed to be the length based on the low dew point level, thus basically, the maintenance can be conducted on the basis of the map (graph) shown in Fig. 2. In a case where a point obtained based on a level of the dew point at the timing and a relative elapsed year relative to the remaining lifetime at the timing exceeds the remaining lifetime shown in Fig. 2 (i.e., a point obtained based on a level of the dew point at the timing and a relative elapsed year relative to the remaining lifetime at the timing falls outside a range of the remaining lifetime), the desulfurization agent is replaced immediately (separate action). Fig. 4 shows the second and third cases (modes). As indicated with a characteristic line W4 in Fig. 4, in a case where the dew point of the source gas is in a range between t2°C and t3°C due to the ingress of the water, the remaining lifetime of the desulfurization agent is determined on the basis of the region M3, for example, at W40. Thereafter, in a case where the dew point of the source gas declines to the level, for example, as indicated with W42 in Fig. 4, the remaining lifetime of the desulfurization agent is determined on the basis of the region M1 in Fig. 4 at W42 at which the dew point is equal to or lower than t1°C.

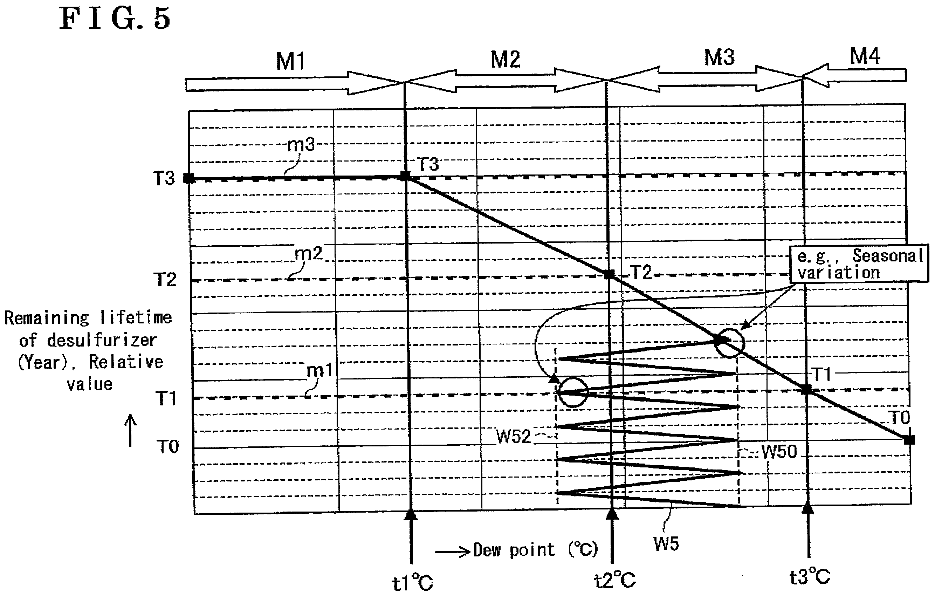

N0. 4 in Fig. 3 shows a fourth case (mode) where the dew point of the source gas generally changes in accordance with seasonal variation. For example, water from melting snow temporarily enters the gas piping during the winter and the spring, or rainwater temporarily enters the gas piping during the rainy season to increase the dew point of the source gas. Those cases correspond to the fourth case (mode) shown in Fig. 5. The dew point varies, for example, as indicated with a characteristic line W5 in Fig. 5, the dew point of the source gas increases to be at a portion W50 in the region M3, and the dew point of the source gas declines to be at a portion W42 in the region M2 (in the season when open air dries). The repetition of the increase and decrease of the dew point of the source gas cycles per year generally in countries and regions having seasonal variation.

As described above, due to the various reasons, there are possibilities that the dew point of the source gas increases and decreases. Those phenomena may occur periodically (every year). Because of those fluctuations of the dew point, a precision for determining the replacement of the desulfurization agent declines with the construction of known fuel cell systems.

According to the construction of the embodiment, the control portion 100X obtains a cumulative operation time per se of the fuel cell system from a reference timing as a physical quantity A1 (serving as physical quantity A, or a first physical quantity) related to cumulative operation time of fuel cell system from reference timing. The control portion 100X obtains a cumulative operation time per se during which the source gas having the dew point equal to or higher than a predetermined level is supplied to the desulfurizer 100 via the source gas passage 6 as a physical quantity B1 (serving as a physical quantity B, or a second physical quantity) related to cumulative operation time during which the source gas having the dew point equal to or higher than a predetermined level is supplied to the desulfurizer 100 via the source gas passage 6. The control portion 100X obtains the remaining lifetime of the desulfurizer 100 on the basis of a ratio of the physical quantity A1 and the physical quantity B1 (e.g., a value obtained by dividing B1 by A1 (i.e., B1/A1)). A relationship between the value obtained by dividing B1 by A1 (i.e., B1/A1) and the remaining lifetime of the desulfurizer 100 can be stored in the memory 100m in advance. Alternatively, the control portion 100X may obtain the remaining lifetime of the desulfurizer 100 by an arithmetic expression on the basis of the value obtained by dividing B1 by A1 (i.e., B1/A1).

In those circumstances, in a case where the value obtained by dividing B1 by A1 (i.e., B1/A1) is small, it shows that a frequency that the source gas with the dew point having equal to or higher than the predetermined level (e.g., equal to or higher than a high dew point) during a total cumulative operation time of the system flows is low, the deterioration of the desulfurization agent is relatively small, and the control portion 100X sets the remaining lifetime of the desulfurization agent to be relatively longer. In a case where the value obtained by dividing B1 by A1 (i.e., B1/A1) is large, it shows that a frequency that the source gas with the dew point having equal to or higher than the predetermined level (e.g., equal to or higher than the high dew point) during the total cumulative operation time of the system flows is high, the deterioration of the desulfurization agent is in progress, and the control portion 100X sets the remaining lifetime of the desulfurization agent to be relatively shorter.

The control portion 100X outputs the maintenance information related to the replacement of the desulfurizer 100 to an alarm 102 on the basis of the remaining lifetime to inform the maintenance information to a user or a person responsible for the maintenance. That is, in a case where the end of the remaining lifetime is earlier than the timing for the next routine maintenance, the control portion 100X outputs the maintenance information related to the replacement of the desulfurizer 100 or the desulfurization agent to the alarm 102 to inform the user or the person in charge of the maintenance to replace the desulfurizer 100 or the desulfurization agent. In those circumstances, the operation of the system may be stopped immediately. Alternatively, in a case where the desulfurizer 100 has the capacity, or room for the remaining life, the system may be operated for a predetermined time even when the alert, or alarm is outputted. On the other hand, in a case where the end of the remaining lifetime is later than the timing of the next routine maintenance, the desulfurizer 100 can be used until the next routine maintenance, thus allowing the operation of the system to continue.

The reference timing generally corresponds to a timing when the fuel cell system is installed, a timing for start computing the cumulative flow, or cumulative flowing amount of the source gas flowing in the source gas passage, or a timing which is estimated to be substantially a timing for start computing. A timing when the fuel cell system including the new (including substantially new) desulfurizer 100 is newly installed, a timing for start flowing the source gas to the new (including substantially new) desulfurizer 100, or a timing for replacing (or a timing for regenerating) the desulfurizer or the desulfurization agent in a case where the desulfurizer 100 or the desulfurization agent is replaced (including the regeneration) are disclosed as examples.

According to the embodiment described above, the control portion 100X obtains the physical quantity A1 related to the cumulative operation time of the fuel cell system from reference timing, and the physical quantity B1 related to the cumulative operation time during which the source gas having the dew point equal to or higher than the predetermined level is supplied to the desulfurizer 100 via the source gas passage 6. The remaining lifetime of the desulfurizer 100 is obtained on the basis of the ratio of the physical quantity B1 to the physical quantity A1 (B1/A1), and the maintenance information related to the replacement of the desulfurizer 100 or the desulfurization agent is outputted to the alarm 102 based on the remaining lifetime to be informed to the user or the person in charge of the maintenance. Thus, even when there is a possibility that the water enters the gas piping because of the deterioration (aging degradation) of the gas piping, because of the plumbing, or even when the ingress of the water from melting snow or rainwater in rainy season occurs, the control portion 100X favorably informs the maintenance information related to the maintenance of the desulfurizer 100 compared to a case where the remaining lifetime of the desulfurizer 100 is determined only based on the physical quantity A related to the cumulative operation time for the fuel cell system from the reference timing of the fuel cell system, thus determining appropriate remaining lifetime of the desulfurizer 100 and allowing to perform the maintenance of the desulfurizer 100 at an appropriate timing.

In stead of the value obtained by dividing B1 by A1 (i.e., B1/A1), the maintenance information related to the replacement of the desulfurizer 100 may be outputted to the alarm 102 to be informed to the user or the person in charge of the maintenance on the basis of the value obtained by dividing A1 by B1 (i.e., A1/B1).

A first modified example of the first embodiment will be explained with reference to Figs. 1 to 5. The first modified example includes basically similar construction and effects to the first embodiment. Based on the ratio of the physical quantity B1 to the physical quantity A1 (B1/A1), the control portion 100X obtains a sum of the remaining lifetime αsum based on the ratio of the physical quantity B1 to the physical quantity A1 (B1/A1) from the memory 100m or the arithmetic expression, and a value obtained by subtracting a total cumulative operation time αtotal from the reference timing up to now from the sum of the remaining lifetime αsum is determined as the remaining lifetime (αsum - αtotal). In those circumstances, the relationship between the value obtained by dividing B1 by A1 (i.e., B1/A1) and the sum of the remaining lifetime αsum is stored in an area of the memory 100m of the control portion 100X. Alternatively, the relationship between the value obtained by dividing B1 by A1 (i.e., B1/A1) and the sum of the remaining lifetime αsum may be obtained on the basis of the arithmetic expression.

In a case where the value obtained by dividing B1 by A1 (i.e., B1/A1) is small, it shows that a frequency that the source gas with the dew point having equal to or higher than the predetermined level (e.g., equal to or higher than high dew point) during the total cumulative operation time of the system flows is low, the deterioration of the desulfurization agent is relatively small, and the control portion 100X sets the remaining lifetime of the desulfurization agent to be relatively longer. In a case where the value obtained by dividing B1 by A1 (i.e., B1/A1) is large, it shows that a frequency that the source gas with the dew point having equal to or higher than the predetermined level (e.g., equal to or higher than the high dew point) during the total cumulative operation time of the system flows is high, the deterioration of the desulfurization agent is in progress, and in those circumstances the control portion 100X sets the remaining lifetime of the desulfurization agent to be relatively shorter. Alternatively, the control portion 100X may obtain the sum of the remaining lifetime αsum on the basis of the ratio of the physical quantity A1 to the physical quantity B1 (A1/B1).

A second modified example of the first embodiment will be explained with reference to Figs. 1 to 5. The second modified example includes basically similar construction and effects to the first embodiment and the first modified example of the first embodiment. Based on the ratio of the physical quantity B1 to the physical quantity A1 (B1/A1), the control portion 100X obtains a sum of the remaining lifetime αsum based on the ratio of the physical quantity B1 to the physical quantity A1 (B1/A1) from the memory 100m or the arithmetic expression, and a value obtained by subtracting a total cumulative operation time αtotal from the reference timing up to now from the sum of the remaining lifetime αsum is determined as the remaining lifetime (αsum - αtotal). In those circumstances, the relationship between the value obtained by dividing B1 by A1 (i.e., B1/A1) and the sum of the remaining lifetime αsum is stored in an area of the memory 100m of the control portion 100X.

The control portion 100X modifies the remaining lifetime of the desulfurization agent in accordance with the timing that the source gas with the dew point equal to or higher than the predetermined level flows in the cumulative operation time αtotal of the system. In those circumstances, even if a desulfurization performance (desulfurization capacity) of the desulfurization agent declines at an early stage because the dew point of the source gas is assumed to be equal to or higher than the predetermined dew point level (either high dew point or middle dew point), for example, at the first half of the total cumulative operation time αtotal, in a case where the dew point of the source gas is assumed to be less than the predetermined dew point, that is, the low dew point, at the second half of the total cumulative operation time αtotal, it Is expected that the desulfurization performance of the desulfurization agent recovers at the second half of the total cumulative operation time αtotal. Thus, the control portion 100X adds an adjusted lifetime (correction lifetime) to the remaining lifetime of the desulfurization agent to be longer.

A second embodiment of the fuel cell system will be explained as follows. The fuel cell system according to the second embodiment basically has similar construction and effects to the first embodiment, the first modified example of the first embodiment, and the second modified example of the first embodiment. The control portion 100X uses a cumulative flowing amount, or cumulative flow of the source gas which flows within the total cumulative operation time αtotal of the fuel cell system from the reference timing as a physical quantity A2 (serving as a first physical quantity). The cumulative flowing amount, or cumulative flow of the source gas which flows within the total cumulative operation time αtotal of the fuel cell system from the reference timing can be measured by means of the flow meter 300 and the control portion 100X having a time measurement function. The physical quantity A2 is not determined particularly considering an increase (rise) of the dew point during the passage (elapse, progression) of the remaining lifetime. Further, the control portion 100X uses a cumulative flowing amount, or cumulative flow of the source gas having the dew point equal to or higher than a predetermined level which is supplied to the desulfurizer 100 within a cumulative operation time via the source gas passage 6 as a physical quantity 82 (serving as a second physical quantity). The mass flow may be applied as the flow (flowing amount), or the volume flow may be applied as the flow (flowing amount). The dew point is detected by a dew point meter (i.e., serving as a sensor, or a dew point sensor) 510. The flow (flowing amount) is detected by the flow meter 300.

In a case where the source gas with low dew point level only flows, a precision for determining the remaining lifetime of the desulfurizer 100 is maintained when determining the remaining lifetime of the desulfurizer 100 only based on the physical quantity A2. However, the source gas with middle dew point level or the high dew point level may temporarily enter the gas piping during the passage (elapse, progression) of the remaining lifetime. In a case where the ingress of the source gas with middle dew point level or the high dew point level is not considered, the precision for determining the remaining lifetime of the desulfurizer 100 is not necessarily sufficient. On the other hand, the physical quantity B2 (serving as a physical quantity B, or a second physical quantity) is determined considering the cumulative flow of the source gas having the dew point equal to or higher than the predetermined dew point level (e.g., middle dew point, high dew point) supplied to the desulfurizer 100, as well as considering an increase, or rise of the dew point of the source gas and an increase, or rise of the humidity. Thus, by determining the remaining lifetime of the desulfurizer 100 on the basis of the both of the physical quantities A2 and B2, even if the dew point level of the source gas is changed from the low dew point level to the middle dew point level or to the high dew point level, the change can be considered to enhance the precision for determining the remaining lifetime of the desulfurizer 100.

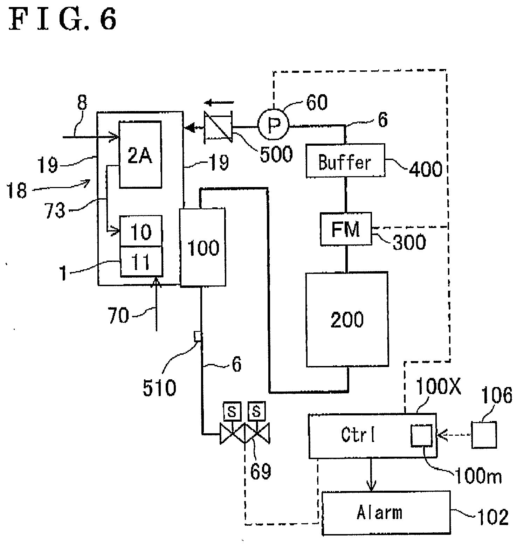

A third embodiment of the fuel cell system will be explained with reference to Fig. 6. The fuel cell system according to the third embodiment includes the construction and effects basically similar to the first embodiment, the first modified example of the first embodiment, and the second modified example of the second embodiment. As shown in Fig. 6, a first desulfurizer 100 is positioned in the environment in relatively high temperature (a first environment) (e.g., temperature environment equal to or higher than 50°C and equal to or lower than 220°C). Particularly, the first desulfurizer 100 is positioned adjoining the external wall surface of the thermal insulation wall 19 in a manner that the first desulfurizer 100 is either in contact with or is close to the external wall surface of the thermal insulation wall 19 so as to receive the heat (either direct heat transfer or receiving radiation heat) from the thermal insulation wall 19 of the electric power generating module 18. The first desulfurizer 100 contains a first desulfurization agent exhibiting (having) a desulfurization performance (desulfurization capacity) for the source gas with relatively high dew point. For example, zeolite may be applied as the first desulfurization agent. Alternatively, porous material, for example, zeolite supporting metal such as silver or copper, or further alternatively, activated carbon may be applied as the first desulfurization agent. A second desulfurizer 200 is positioned at a second environment (e.g., 0°C to 50°C) which is relative low temperature compared to the first environment, and is positioned separately, or away from the electric power generating module 18 which is in the high temperature. A second desulfurization agent contained in the second desulfurizer 200 has (exhibits) desulfurization performance (desulfurization capacity) relative to the source gas having relatively low dew point. The second desulfurizer 200 exhibits (has) lower desulfurization performance (desulfurization capacity) for the source gas with relatively high dew point (i.e., water vapor volume is relatively large) compared to the desulfurization performance (desulfurization capacity) that the second desulfurizer 200 exhibits (has) for the source gas with relatively low dew point (i.e., water vapor volume is relatively small). For example, zeolite is applied as the second desulfurization agent.

According to the third embodiment, the source gas flows in an order from the first desulfurizer 100 which is installed (which is configured to be installed) at high temperature environment to the second desulfurizer 200 which is installed (which is configured to be installed) at low temperature environment. This enables to receive the heat of the source gas which passes through the first desulfurizer 100 by the second desulfurizer 200 to radiate the heat at the second desulfurizer 200. Thus, the temperature of the source gas which flows into the flow meter 300 which is susceptible to the influence of the heat can be declined as much as possible. In those circumstances, a problem of the thermal resistance of the flow meter 300 can be resolved. Accordingly, even if the heat retention capacity of the source gas which passes through the first desulfurizer 100 is high, the temperature of the source gas can be lowered sufficiently by the heat radiation at the second desulfurizer 200.

According to the third embodiment, the control portion 100X obtains a cumulative operation time per se of the fuel cell system from the reference timing as the physical quantity A1 related to the cumulative operation time for the fuel cell system from the reference timing. The control portion 100X obtains a cumulative operation time per se during which the source gas having the dew point equal to or higher than a predetermined level is supplied to the first desulfurizer 100 and the second desulfurizer 200 via the source gas passage 6 as a physical quantity B1 related to cumulative operation time during which the source gas having the dew point equal to or higher than a predetermined level is supplied to the first desulfurizer 100 and the second desulfurizer 200 via the source gas passage 6 from the reference timing. It is preferable to obtain both of the first desulfurizer 100 and the second desulfurizer 200 as references for the physical quantities A1, B1, however, alternatively one of the first desulfurizer 100 and the second desulfurizer 200 may be applied as a reference for the physical quantities A1, B1 depending on the cases. In other words, it is preferable to obtain a dew point (humidity) at the high temperature environment and at the low temperature environment at both of the desulfurizer 100 and the second desulfurizer 200 as references for the physical quantities A1, B1, however, alternatively, one of the dew point (humidity) at the high temperature environment and at the low temperature environment at one of the desulfurizer 100 and the second desulfurizer 200 may be obtained to be applied as a reference for the physical quantities A1, B1 depending on the cases.

The control portion 100X outputs the maintenance information regarding the replacement of the first and second desulfurizer 100, 200 to the alarm 102 on the basis of a ratio of the physical quantity B1 to the physical quantity A1, or a ratio of the physical quantity A1 to the physical quantity B1 (a value obtained by dividing B1 by A1 (i.e., B1/A1), a value obtained by dividing A1 by B1 (i.e., A1/B1)) to inform the user or a person in charge of maintenance. In those circumstances, the operation of the system may be stopped immediately. Alternatively, in a case where the first and second desulfurizer 100, 200 has the capacity, or room for the remaining life, the system may be operated for a predetermined time even when the alert, or alarm is outputted. A cumulative operation time may be applied as the physical quantity B1 and the physical quantity A1 similar to the first embodiment. Alternatively, instead of the physical quantity B1 to the physical quantity A1 related to the time, similar to the second embodiment, a physical quantity A2 (serving as a first physical quantity) and a physical quantity B2 (serving as a second physical quantity) related to a cumulative flow, or cumulative flowing amount may be applied.

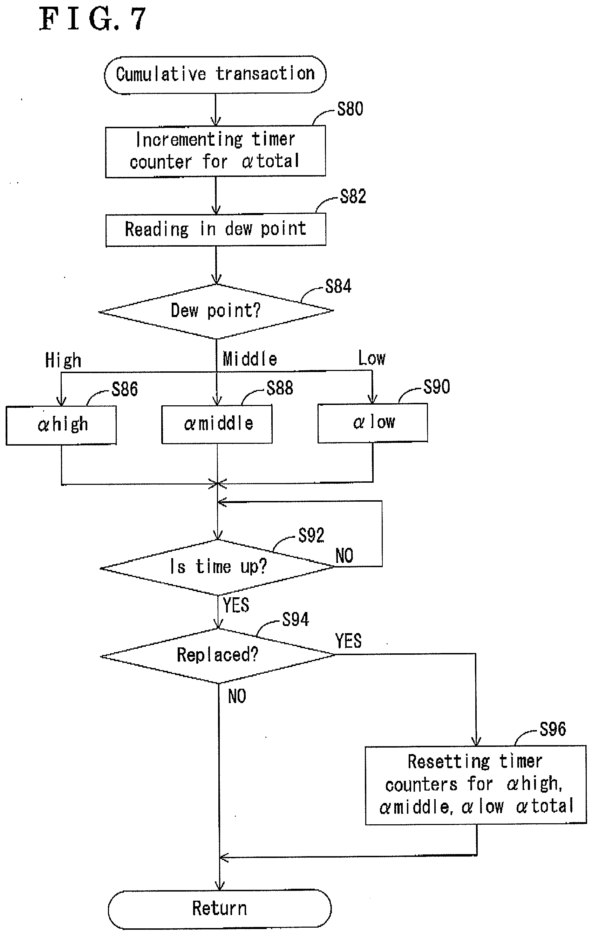

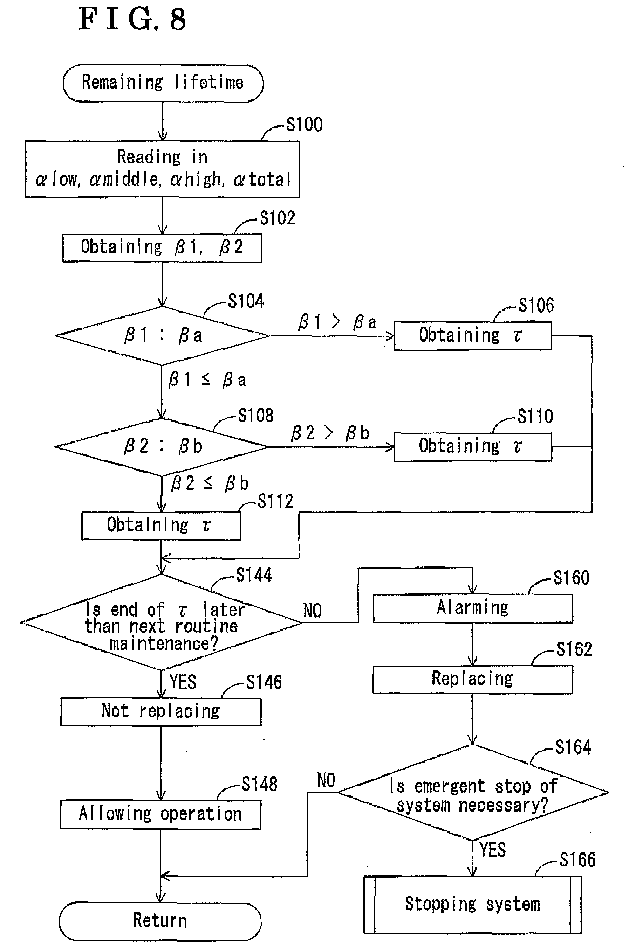

A fourth embodiment of the fuel cell system will be explained with reference to Figs. 7 and 8. The fuel cell system according to the fourth embodiment includes the construction and effects similar to the foregoing embodiments, thus Figs. 1 and 6 are applied. Figs. 7 and 8 show an example of a control law executed by the control portion 100X. As shown in Fig. 7, first, the control portion 100X increments a timer counter for a total cumulative operation time αtotal during which the fuel cell system is operated (generally, the total cumulative operation time αtotal corresponds to the total cumulative time obtained by accumulating the time from an activation switch for the system is turned on until a stop switch is turned on during which the source gas is supplied via the desulfurizer, and does not include a stand-by time)(Step S80), then reads in a detection result of the dew point meter 510 (Step S82). Further, the dew point of the detected source gas is classified into a high dew point (equal to or higher than Th°C), a middle dew point (lower than Th°C and equal to or higher than Tm°C), and a low dew point (lower than Tm°C)(Step S84). In a case where the detected dew point of the source gas is classified as the high dew point, a timer counter for a cumulative operation time αhigh for the high dew point is incremented (Step S86). In a case where the detected dew point of the source gas is classified as the middle dew point, a timer counter for a cumulative operation time αmiddle for the middle dew point is incremented (Step S88). In a case where the detected dew point of the source gas is classified as the low dew point, a timer counter for a cumulative operation time αlow for the low dew point is incremented (Step S90). αtotal is basically defined as αhigh+αmiddle+αlow. Then, the system stands by until a predetermined time is up in order to prevent hunting for the determination (Step S92).

The control portion 100X determines whether the desulfurization agent is replaced and a reset switch (serving as a rest element) 106 is turned ON (Step S94). In a case where the reset switch 106 is in an ON state, the replacement of the desulfurization agent is completed, thus the control portion 100X resets the referent timing, and resets the timer counter for the cumulative operation time αlow, the timer counter for the cumulative operation time αmiddle, and the timer counter for the cumulative operation time αhigh to be zero (0) (Step S96). Further, the control portion 100X resets the total cumulative operation time αtotal of the fuel cell system. In a case where the desulfurization agent is not replaced, the transaction returns to a main routine.

Fig. 8 shows a remaining lifetime calculation transaction that the control portion 100X executes every predetermined (constant) time. On the basis of the detection result of the dew point meter 510, the control portion 100X reads in the timer counter for the cumulative operation time αmiddle from the reference timing during which the source gas with equal to or higher than the middle dew point (Tm°C) flows (Step S100). Further, the control portion 100X reads in the timer counter for the cumulative operation time αhigh from the reference timing during which the source gas with equal to or higher than the high dew point (Th°C) flows. Then, the control portion 100X reads in the timer counter for the total cumulative operation time αtotal for the fuel cell system from the reference timing.

The reference timing is defined, generally, as a timing when the fuel cell system is installed, a timing for start computing the cumulative flow, or cumulative flowing amount of the source gas flowing in the source gas passage, or a timing which is estimated to be substantially a timing for start computing. A timing when the fuel cell system including the new (including substantially new) desulfurizer is newly installed, a timing for start flowing the source gas to the new (including substantially new) desulfurizer, or a timing for replacing (or a timing for regenerating) the desulfurizer in a case where the desulfurizer is replaced (including the regeneration) are disclosed as examples. The reset switch 106 is turned on at the reference timing, and a timer function and a timer counter function of the control portion 100X are reset.

Next, the control portion 100X obtains a ratio of the cumulative operation time αhigh for the high dew point to the total cumulative operation time αtotal, that is, a value β1 obtained by dividing αhigh by αtotal (i.e., αhigh/αtotal). Further, the control portion 100X obtains a ratio of the cumulative operation time αmiddle for the middle dew point to the total cumulative operation time αtotal, that is, a value β2 obtained by dividing αmiddle by αtotal (i.e., αmiddle/αtotal) (Step S102). The value β1 corresponds to a frequency that the source gas with equal to or higher than the high dew point flows during the total cumulative operation time αtotal of the system. The value β2 corresponds to a frequency that the source gas with equal to or higher than the middle dew point flows during the total cumulative operation time αtotal of the system.

Next, the control portion 100X compares the value β1 and a threshold βa. In a case where the value β1 is greater than the threshold βa (β1 > βa), it is determined that the source gas with the high dew point flows to the desulfurizer 100 frequently (high frequency), then the transaction advances to Step S106, where the control portion 100X obtains a remaining lifetime τ from a total lifetime of the desulfurizer 100 by calculation. More particularly, a value obtained by subtracting the total cumulative operation time αtotal from a sum of the lifetime αsum-high for the high dew point (e.g., T5 hours) is defined as the remaining lifetime τ.

In a case where the value β1 is equal to or less than the threshold βa (β1 ≤ βa), it is determined that the source gas with the high dew point does not flow to the desulfurizer 100 frequently (low frequency), then the transaction advances to Step 108. Then, the control portion 100X compares a ratio of the cumulative operation time αmiddle for the middle dew point to the total cumulative operation time αtotal, that is, a value β2 obtained by dividing αmiddle by αtotal (i.e., αmiddle / αtotal) and a threshold βb are compared (Step S108). When the value β2 is greater than the threshold value βb, the control portion 100X determines that the source gas with middle dew point flows to the desulfurizer 100 frequently (high frequency), then the transaction advances to Step 110, where the remaining lifetime τ of the desulfurizer 100 is obtained by the calculation. More particularly, the control portion 100X determines a value subtracting the total cumulative operation time αtotal from the sum of the remaining lifetime αsum-middle for the middle dew point (e.g., T8 hours) as the remaining lifetime (Step S110). In a case where the value β2 is equal to or less than the threshold βb (β2 ≤ βb), the control portion 100X determines that the source gas with the low dew point flows to the desulfurizer 100, then the transaction advances to Step 112, where the remaining lifetime τ of the desulfurizer 100 is obtained by the calculation. More particularly, the control portion 100X determines a value subtracting a total cumulative operation time αlow for the low dew point from a sum of the remaining lifetime αsum-low for the low dew point (e.g., T12 hours) as the remaining lifetime τ. In those circumstances, the following relationship is established: αsum-high < αsum-middle < αsum-low. This relationship is stored in an area of the memory 100m of the control portion 100X.

Then, it is determined that the end of the remaining lifetime τ of the desulfurization agent obtained in the foregoing manner is later than (exceeds) a timing of the next routine maintenance (Step S144). In a case where the end of the remaining lifetime τ of the desulfurization agent is not later than (does not exceed) the timing of the next routine maintenance (NO at Step S144), it is necessary to replace the desulfurization agent before the next routine maintenance. Thus, the control portion 100X outputs an alert signal to the alarm 102 (Step S160), and outputs a command for replacing the desulfurization agent before the next routine maintenance (Step S162). Further, the control portion 100X determines whether stopping the system emergently (Step S164), and if necessary (YES at Step S164), outputs a command for emergently stopping the system (Step S166).

On the other hand, in a case where the end of the remaining lifetime τ of the desulfurization agent is later than (exceeds) the timing of the next routine maintenance (YES at Step S144), the control portion 100X commands to replace the desulfurization agent at the next routine maintenance. Namely, the control portion 100X outputs a signal for not replacing the desulfurization agent at the time (Step S146), outputs a signal allowing the system to operate (Step S148), and returns the transaction to the main routine.

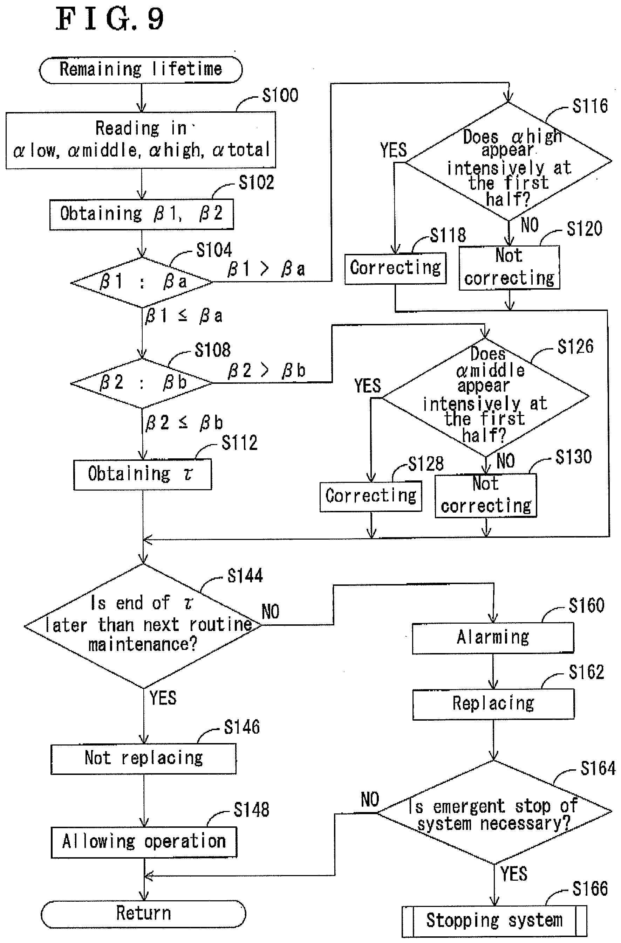

A fifth embodiment of the fuel cell system will be explained with reference to Fig. 9. The fuel cell system according to the fifth embodiment includes the construction, control law, and effects basically similar to those of the fourth embodiment, thus Figs. 1 or Fig. 6 may be applicable. Basic flow of a flowchart shown in Fig. 9 is common to the flowchart shown in Fig. 8. Thus, portions different from the flow in Fig. 8 will be explained and the same explanations are not repeated. At Step S102, the control portion 100X obtains a ratio of the cumulative operation time αhigh for the high dew point to the total cumulative operation time αtotal, that is, a value β1 obtained by dividing αhigh by αtotal (i.e., αhigh/αtotal). Further, the control portion 100X obtains a ratio of the cumulative operation time αmiddle for the middle dew point to the total cumulative operation time αtotal, that is, a value β2 obtained by dividing αmiddle by αtotal (i.e., αmiddle/αtotal). The value β1 corresponds to a frequency that the source gas with equal to or higher than the high dew point flows during the total cumulative operation time αtotal of the system. The value β2 corresponds to a frequency that the source gas with equal to or higher than the middle dew point flows during the total cumulative operation time αtotal of the system.

At Step S104, the control portion 100X compares the value β1 and a threshold βa. In a case where the value β1 is greater than the threshold βa (β1 > βa), it is determined that the source gas with the high dew point flows to the desulfurizer 100 frequently (high frequency), then the transaction advances to Step S116. At Step S116, the control portion 100X determines whether the cumulative operation time αhigh for the high dew point appears intensively at the first half of the total cumulative operation time αtotal (the first half relative to a middle point of the αtotal). In those circumstances, even if the source gas supplied at the first half of the total cumulative operation time αtotal has high dew point, in a case where the dew point of the source gas supplied at the second half of the total cumulative operation time αtotal (the second half relative to the middle point of the total cumulative operation time αtotal) has low dew point (returned to the low dew point)(e.g., by repairing the deteriorated piping), a recovery of the desulfurization lifetime of the desulfurizer can be expected, thus the remaining lifetime of the desulfurizer is modified, or corrected to be longer. Particularly, the control portion 100X determines a value subtracting the cumulative operation time αtotal for the high dew point from the sum of the lifetime αsum-high for the high dew point (e.g., T5 hours) as a provisional remaining lifetime τa, and adds Δτ1 to τa for correction to obtain the remaining lifetime τ (Step S118). Alternatively, τa may be multiplied by a correction factor, or correction coefficient.

Further, in a case where the cumulative operation time αhigh for the high dew point does not appear intensively at the first half of the total cumulative operation time αtotal (NO at Step 116), the remaining lifetime of the desulfurization agent is not corrected, or modified. That is, the control portion 100X determines the value subtracting the cumulative operation time αtotal from the sum of the lifetime αsum-high for the high dew point (e.g., T5 hours) as the remaining lifetime τ (Step S120).

As a result of the determination at Step S104, in a case where the value β1 is equal to or less than the threshold βa (β1 ≤ βa), it is determined that the source gas with the high dew point does not flow to the desulfurizer 100 frequently (low frequency), then the transaction advances to Step 108. Then, the control portion 100X compares a ratio of the cumulative operation time αmiddle for the middle dew point to the total cumulative operation time αtotal, that is, a value β2 obtained by αmiddle / αtotal and a threshold βb (Step S108) are compared. When the value β2 is greater than the threshold value βb, the control portion 100X determines that the source gas with middle dew point flows to the desulfurizer 100 frequently (high frequency), then the transaction advances to Step 126. At Step S126, the control portion 100X determines whether the cumulative operation time αmiddle for the middle dew point appears intensively at the first half of the total cumulative operation time αtotal (the first half relative to a middle point of the αtotal). In those circumstances, even if the source gas supplied at the first half of the total cumulative operation time αtotal has middle dew point, in a case where the dew point of the source gas supplied at the second half of the total cumulative operation time αtotal (the second half relative to the middle point of the total cumulative operation time αtotal) has low dew point (returned to the low dew point)(e.g., by repairing the deteriorated piping), a recovery of the desulfurization lifetime of the desulfurizer can be expected, thus the remaining lifetime of the desulfurizer is modified, or corrected to be longer. Particularly, the control portion 100X determines a value subtracting the cumulative operation time αtotal from the sum of the lifetime αsum-middle for the middle dew point (e.g., T8 hours) as a provisional remaining lifetime τa, and adds Δτ2 to τa for correction to obtain the remaining lifetime τ (Step S128). Further, in a case where the cumulative operation time αmiddle for the middle dew point does not appear intensively at the first half of the total cumulative operation time αtotal (NO at Step 126), the remaining lifetime of the desulfurization agent is not corrected, or modified. That is, the control portion 100X determines the value subtracting the cumulative operation time αtotal for the middle dew point from the sum of the lifetime αsum-middle for the middle dew point (e.g., T8 hours) as the remaining lifetime τ (Step S130).

As a result of the determination at Step S108, in a case where the value β2 is equal to or less than the threshold βb (β2 ≤ βb), the control portion 100X determines that the source gas with the low dew point flows to the desulfurizer 100 frequently (high frequency), then the transaction advances to Step 112, where the remaining lifetime τ of the desulfurizer 100 is obtained by the calculation. More particularly, the control portion 100X determines a value subtracting the cumulative operation time αlow for the low dew point from the sum of the remaining lifetime αsum-low for the low dew point (e.g., T12 hours) as the remaining lifetime τ. In those circumstances, the following relationship is established: αsum-high < αsum-middle < αsum-low. This relationship is stored in an area of the memory 100m of the control portion 100X.

According to the construction of the fifth embodiment, the control portion 100X considers whether the source gas having the dew point which is equal to or higher than the predetermined level appears at the first half of the total cumulative operation time αtotal or at the second half of the total cumulative operation time αtotal, then corrects, or modifies the lifetime of the desulfurization agent on the basis of the results of whether the source gas having the dew point which is equal to or higher than the predetermined level appears at the first half of the total cumulative operation time αtotal or at the second half of the total cumulative operation time αtotal. That is, the control portion 100X corrects, or modifies the remaining lifetime of the desulfurization agent In accordance with the timing, or the time that the source gas having the dew point which is equal to or higher than the predetermined level flows in the total cumulative operation time αtotal of the system.

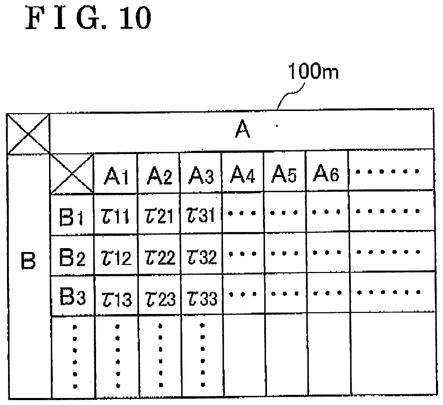

A sixth embodiment of the fuel cell system will be explained with reference to Fig. 6. The fuel cell system according to the sixth embodiment includes the construction, the control law, and effects basically similar to those of the foregoing embodiments, thus Figs. 1 or Fig. 6 may be applicable. According to the sixth embodiment, a physical quantity A (i.e., serving as a first physical quantity) related to a cumulative operation time for the fuel cell system from the reference timing and a physical quantity B (i.e., serving as a second physical quantity) related to a cumulative operation time during which the source gas with the dew point equal to or higher than the predetermined level or the humidity with equal to or higher than a predetermined level is supplied to the desulfurizer 100 from the reference timing via the source gas passage 6 (here, the physical quantity B has the physical quantity which is expressed in, or defined by the same unit with the physical quantity A) are applied. The cumulative operation time itself, or the flow, or flowing amount (either volume flow or mass flow) of the source gas which flows during the cumulative operation time is defined as the physical quantity A and the physical quantity B. As shown in Fig. 10, the relationship of the physical quantities A, B and the remaining lifetime of the desulfurization agent is stored as a map in an area of the memory 100m of the control portion 100X. Thus, by obtaining the physical quantity A and the physical quantity B, the remaining lifetime τ (τ11, τ12, τ13-----, τ21, τ22, τ23-----) of the desulfurization agent can be obtained.

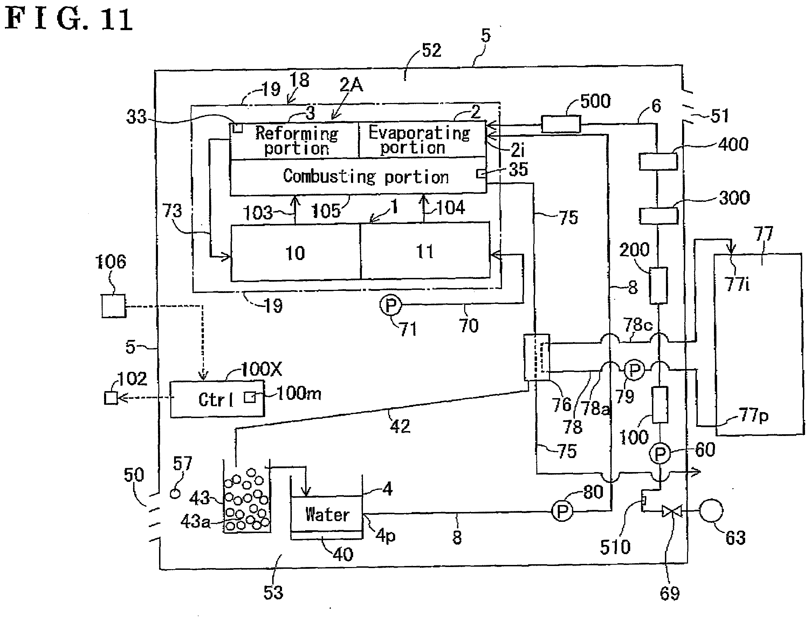

Fig. 11 shows an example of an overview of an application of the fuel cell according to the embodiments. As shown in Fig. 11, the fuel cell system includes the fuel cell 1, an evaporating portion 2 for generating water vapor by evaporating the liquid-phase water, a reforming portion 3 for forming anode gas by reforming a fuel (source gas, source fuel gas) using the water vapor generated at the evaporating portion 2, a tank 4 for reserving the liquid-phase water which is to be supplied to the evaporating portion 2, and a case 5 for housing the fuel cell 1, the evaporating portion 2, the reforming portion 3, and the tank 4. The fuel cell 1 includes the anode 10 and the cathode 11 which sandwich an ion conductor therebetween. For example, a solid oxide fuel cell (SOFC) which is operated at a temperature, for example, equal to or greater than 400 degrees Celsius, may be applied to the fuel cell 1. The reforming portion 3 is formed by supporting a reforming catalyst onto a carrier, for example, ceramics, and is provided adjoining the evaporating portion 2. The reforming portion 3 and the evaporating portion 2 structure the reformer 2A, and are enclosed by the thermal insulation wall 19 together with the fuel cell 1 to form the electric power generating module 18. The reforming portion 3, the evaporating portion 2, and a combusting portion 105 are provided in the electric power generating module 18. An anode exhaust gas exhausted from the anode 10 is supplied to the combusting portion 105 via an anode gas exhaust passage 103. A cathode exhaust gas exhausted from the cathode 11 is supplied to the combusting portion 105 via a passage (cathode gas exhaust passage) 104. The combusting portion 105 combusts the fuel (source gas, source fuel gas?) supplied from the anode 10 by the cathode exhaust gas exhausted from the cathode 11 to heat the evaporating portion 2 and the reforming portion 3 at the activation of the fuel cell system. The combusting portion 105 combusts the anode exhaust gas exhausted from the anode 10 by the cathode exhaust gas exhausted from the cathode 11 to heat the evaporating portion 2 and the reforming portion 3 during the electric power generating operation. The combusting portion 105 is provided with a combustion exhaust gas passage 75, and the combustion exhaust gas including the gas after combusted in the combusting portion 105 and the gas being not combusted is released to the atmosphere via the combustion exhaust gas passage 75. A thermal sensor 33 for detecting the temperature of the reforming portion 3 is provided. An ignition portion 35 serving as a heater for igniting the fuel is provided inside the combusting portion 105. Any construction is applicable as the ignition portion 35 as long as igniting the fuel in the reforming portion 3. An outside air thermal sensor 57 for detecting the temperature of the outside air is provided. Signals from the thermal sensors 33, 57 are inputted into the control portion 100X. The control portion 100X is configured to output a signal to the alarm 102.

During the power generating operation of the fuel cell system, the reformer 2A is heated within the thermal insulation wall 19 to reach the appropriate temperature for the reforming reaction. During the power generating operation, the evaporating portion 2 is heated to evaporate the water. In a case where the solid oxide fuel cell (SOFC) is applied as the fuel cell 1, because the anode exhaust gas exhausted from the anode 10 and the cathode exhaust gas exhausted from the cathode 11 are combusted at the combusting portion 105, the reforming portion 3 and the evaporating portion 2 are simultaneously heated within the power generating module 18. As shown in Fig. 11, the source gas passage 6 is provided for supplying the source gas from a gas source 63 to the reformer 2A. The pump 60, the first desulfurizer 100 configured to be installed at high temperature environment, the flow volume sensor (flow meter) 300, and the check valve 500 are provided at the source gas passage 6.

The first desulfurizer 100 contains the first desulfurization agent which includes a porous material of zeolite system as base material, which includes metal, for example, silver. The second desulfurizer 200 includes the second desulfurization agent which includes a porous material of zeolite system as base material. The cathode gas passage 70 for supplying the cathode gas (air) to the cathode 11 is provided at the cathode 11 of the fuel cell 1. A cathode pump 71 serving as a conveying source for conveying the cathode gas is provided at the cathode gas passage 70.

As shown in Fig. 11, the case 5 includes an inlet port 50 and an exhaust port 51 which are in communication with the outside air, and further includes an upper chamber space 52 serving as a first chamber and a lower chamber space 53 serving as a second chamber. The fuel cell 1 is housed in the upper side of the case 5, that is, in the upper chamber space 52 together with the reforming portion 3 and the evaporating portion 2. The tank 4 reserving the liquid-phase water to be reformed in the reforming portion 3 is housed in the lower chamber space 53 of the case 5. A heating portion 40 serving as a heater, for example, an electric heater, is provided at the tank 4. The heating portion 40 is configured to heat the water reserved in the tank 4, and is formed with, for example, an electric heater. For example, when the environmental temperature, for example, the outside air temperature is lower, the water reserved in the tank 4 is heated to be equal to or higher than a predetermined temperature (e.g., 5°C, 10°C, 20°C) on the basis of a command signal from the control portion 100X to restrain the water from freezing. As shown in Fig. 11, the water supply passage 8 which establishes the communication between an outlet port 4p of the tank 4 positioned at the lower chamber space 53 and an inlet port 2i of the evaporating portion 2 positioned at the upper chamber space 52 is provided in the case 5 and serves as a pipe. Because the tank 4 is arranged at a lower level compared to the evaporating portion 2 within the case 5, the water supply passage 8 basically extends in an upward-downward direction. As shown in Fig. 11, the water supply passage 8 is configured to supply the water reserved in the tank 4 to the evaporating portion 2 via the inlet port 2i. The water supply passage 8 is provided with a pump 80 serving as a water conveying source for carrying the water reserved in the tank 4 to the evaporating portion 2. The control portion 100X is provided for controlling the pump 80. Further, the control portion 100X controls the pumps 80, 71, 79, and 60.

Upon the actuation of the pump 60 when the fuel cell system is activated, the fuel (source gas) flows from the source gas passage 6 to be supplied to the combusting portion 105 via the evaporating portion 2, the reforming portion 3, the anode gas passage 73, the anode 10 of the fuel cell 1, and the anode gas exhaust passage 103. The cathode fluid (air) is pumped by the cathode pump 71 to flow into the combusting portion 105 via the cathode gas passage 70, the cathode 11, and the cathode gas exhaust passage 104. When the ignition portion 35 is ignited in those circumstances, the gas is combusted at the combusting portion 105, thus heating the reforming portion 3 and the evaporating portion 2. When the pump 80 is actuated in a state where the reforming portion 3 and the evaporating portion 2 are heated, the water in the tank 4 is conveyed in the water supply passage 8 from the outlet port 4p of the tank 4 to the inlet port 2i of the evaporating portion 2, and is heated to be evaporated at the evaporating portion 2. The water vapor rises to the reforming portion 3 together with the fuel supplied from the source gas passage 6. In those circumstances, preferably, the fuel may be in a gas-phase, however, alternatively, the fuel may be in a liquid-phase. At the reforming portion 3, the fuel (source gas) is reformed by means of the vaporized water to be the anode fluid (i.e., the gas including the hydrogen). The anode fluid (anode gas) is supplied to the anode 10 of the fuel cell 1 via the anode gas passage (anode fluid passage) 73. Further, the cathode fluid (i.e., the gas including the oxygen; the air in the case 5) is supplied to the cathode 11 of the fuel cell 1 via the cathode gas passage 70. Thus, the fuel cell 1 generates the electricity. The exhaust gas of the anode fluid exhausted from the anode 10 and the exhaust gas of the cathode fluid exhausted from the cathode 11 flow through the passages 103, 104, respectively, and reach the combusting portion 105 to be combusted therein. The exhaust gas with high temperature is exhausted to the outside of the case 5 via the combustion exhaust gas passage 75.

Upon the actuation of the pump 80 during the power generating operation of the fuel cell system, the water in the tank 4 is conveyed from the outlet port 4p of the tank 4 to the inlet port 2i of the evaporating portion 2, and is heated at the evaporating portion 2 to be vaporized. The vaporized water rises to the reforming portion 3 together with the source gas supplied through the source gas passage 6. At the reforming portion 3, the fuel is reformed by the water vapor to be the anode gas (i.e., the gas including hydrogen). In a case where a methane system gas is applied as the fuel, the anode gas is generated by the steam reforming on the basis of the following formula (1). In those circumstances, the fuel is not limited to the methane system gas.

(1) CH₄ + 2H₂O → 4H₂ + CO₂

CH₄ + H₂O → 3H₂ +CO

The generated anode gas is supplied to the anode 10 of the fuel cell 1 via the anode gas passage 73. Further, the cathode gas (i.e., the gas including the oxygen; air in the case 5) is supplied to the cathode 11 of the fuel cell 1 via the cathode gas passage 70. Accordingly, the fuel cell 1 generates electric power. The exhaust gas with high temperature exhausted from the fuel cell 1 is exhausted to the outside of the case 5 via the combustion exhaust gas passage 75.

The combustion exhaust gas passage 75 is provided with a heat exchanger 76 including a condensing function. The heat exchanger 76 is provided with a passage 78 for pumping the reserved warm water which is connected to a reserving tank 77, and a pump 79. The passage 78 for pumping the reserved warm water includes an outward passage 78a and a return passage 78c. The water in the reserving tank 77 with low temperature is outputted from an outputting port 77p of the reserving tank 77 by an actuation of the pump 79 for pumping the reserved warm water, flows through the outward passage 78a, and reaches the heat exchanger 76 to be heated by a heat exchanging operation of the heat exchanger 76. The water heated at the heat exchanger 76 returns to the reserving tank 77 via a return port 77i by way of the return passage 78c. Thus, the water in the reserving tank 77 is heated to be warm. The vaporized water included in the exhaust gas is condensed at the heat exchanger 76 to be the condensed water. The condensed water is supplied to a water purifier 43, for example, by the gravity via a condensed water passage 42 formed extending from the heat exchanger 76. The water purifier 43 includes a water purification agent 43a, for example, an ion exchange resin, which removes the impurities in the condensed water. The water removed with the impurities is moved to the tank 4 to be reserved therein. When the pump 80 is actuated, the water in the water tank 4 is supplied to the evaporating portion 2 with a high temperature via the water supply passage 8, is vaporized at the evaporating portion 2, is supplied to the reforming portion 3 as the vaporized water, and is consumed in a reforming reaction for reforming the fuel at the reforming portion 3. The control portion 100X informs, or outputs the maintenance information regarding the maintenance (for example, replacement, regeneration) for the first desulfurizer 100 and the second desulfurizer 200 to the alarm 102.

The present invention is not limited to the constructions of the embodiments and the application examples shown in drawing figures, and can be modified within a range of the scope of the invention. The fuel cell is not limited to the solid oxide fuel cell (SOFC). Alternatively, a polymer electrolyte fuel cell, a phosphoric acid fuel cell (PAFC), and a molten-carbonate fuel cell (MCFC) may be applied as the fuel cell. Namely, as long as including a desulfurizer for desulfurizing the fuel, any fuel cell system is applicable. The types of fuel (source gas, source fuel gas) are not limited, and any gas including the sulfur component, for example, town gas, propane gas, biogas, liquid petroleum gas (LPG), and compressed natural gas (CNG) are applicable. According to the embodiments, the dew point meter 510 is applied. However, alternatively, a humidity sensor for detecting the absolute humidity of the source gas or a relative humidity of the source gas may be applied. According to the embodiments, the buffer 400 and the check valve 500 are provided as shown in Fig. 1. However, alternatively, the buffer 400 and the check valve 500 may be omitted depending on the cases.

The predetermined dew point or the predetermined humidity can be set in accordance with a system.

The first physical quantity (physical quantity A) related to the cumulative operation time corresponds to the cumulative operation time from the reference timing during which the source gas flows at the fuel cell system, or alternatively, corresponds to the cumulative flowing amount (cumulative flow) supplied to the desulfurizer during the cumulative operation time. The cumulative operation time which serves as a reference for the first physical quantity (physical quantity A) corresponds to a cumulative time during which the source gas is supplied to the desulfurizer and includes an activation time of the system at which the source gas Is supplied to the desulfurizer and a power generating operation time, however, it is preferable that the cumulative operation time does not include a stand-by time during which the source gas is not supplied to the desulfurizer.

The reference timing generally corresponds to a timing when the fuel cell system is installed, a timing for start computing the cumulative flow, or cumulative flowing amount of the source gas flowing in the source gas passage, or a timing which is estimated to be substantially a timing for start computing. A timing when the fuel cell system including the new (including substantially new) desulfurizer is newly installed, a timing for start flowing the source gas to the new (including substantially new) desulfurizer, or a timing for replacing (or a timing for regenerating) the desulfurizer in a case where the desulfurizer is replaced (including the regeneration) are disclosed as examples.

The first physical quantity (physical quantity A) is defined without considering a rise of the dew point of the source gas or the humidity during the passage (elapse, progression) of the remaining lifetime of the desulfurizer. When determining the remaining lifetime of the desulfurizer only on the basis of the first physical quantity (physical quantity A) related to the cumulative operation time, a precision of the remaining lifetime of the desulfurizer is favorably maintained in a case where the source gas only with the low dew point flows. However, in a case where the source gas with the middle dew point or with the high dew point enters the gas piping, or the source gas passage during the passage (elapse, progression) of the remaining lifetime of the desulfurizer, the ingress of the source gas with the middle dew point or with the high dew point is not considered, thus the precision for determining the remaining lifetime of the desulfurizer is not necessarily sufficient.

On the other hand, the second physical quantity (physical quantity B) related to the cumulative operation time is defined as a cumulative operation time during which the source gas having the dew point equal to or higher than a predetermined level or the source gas having the humidity equal to or higher than a predetermined level (e.g., middle dew point and high dew point) is supplied to the desulfurizer (100, 200), or defined as a cumulative flow (cumulative flow amount) of the source gas supplied to the desulfurizer (100, 200) during the cumulative operation time. Thus, the second physical quantity (physical quantity B) is defined considering a rise of the dew point or the humidity of the source gas. Accordingly, by determining the remaining lifetime of the desulfurizer (100, 200) on the basis of the first physical quantity (physical quantity A) and the second physical quantity (physical quantity B) related to the cumulative operation time, even when a level of the dew point of the source gas changes from the low dew point to either middle dew point or high dew point, those change can be considered, and thus the precision for determining the remaining lifetime of the desulfurizer (100, 200) can be enhanced. It is preferable that the first physical quantity (physical quantity A) and the second physical quantity (physical quantity B) have the physical quantities of the same unit, or the physical quantities expressed in the same unit. The dew point is defined as the temperature at which the water contained in the gas condenses. When the dew point is higher relatively, the water vapor content contained in the gas is relatively increased.

As explained above, the deterioration (aging degradation) of the gas piping and plumbing may cause the ingress of the water to the gas piping. The water from melting snow during the springtime or the rainwater in rainy season may cause the ingress to the ground and thus to the gas piping. Upon receiving those influences, the dew point and the water vapor content contained in the source gas varies. Thus, the precision for determining the maintenance timing of the desulfurizer cannot be sufficiently attained if the determination is made only on the basis of the first physical quantity (physical quantity A) related to the cumulative operation time of the fuel cell system, and the determination for the maintenance timing of the desulfurizer cannot be made appropriately. According to the disclosure, the control portion determines the remaining lifetime of the desulfurizer on the basis of both of the first physical quantity (physical quantity A) related to the cumulative operation time of the fuel cell system from the reference timing and the second physical quantity (physical quantity B) related to the cumulative operation time from the reference timing during which the source gas with the dew point equal to or higher than the predetermined level or the humidity with equal to or higher than the predetermined level is supplied to the desulfurizer (100, 200) via the source gas passage (6), and informs the maintenance information related to the maintenance of the desulfurizer. The maintenance includes at least one of a replacement of the desulfurizer itself and a replacement of the desulfurization agent contained in the desulfurizer.

Accordingly, even when there is a possibility that the ingress of the water to the gas piping may occur because of the deterioration (aging degradation) of the gas piping and plumbing or even when the ingress of the water from melting snow during the springtime or the rainwater in rainy season occurs, the control portion (100X) can determine the appropriate remaining lifetime of the desulfurizer and can accurately inform the maintenance information related to the maintenance of the desulfurizer to appropriately define the maintenance timing of the desulfurizer compared to a case where the determination is made only on the basis of the first physical quantity (physical quantity A) related to the cumulative operation time of the fuel cell system. The control portion (100X) is configured to inform the maintenance information regarding the maintenance of the desulfurizer. In those circumstances, informing the maintenance information may include, for example, outputting (alarming) a maintenance signal to an alarm, displaying a maintenance signal on a display portion, or stopping an operation of the system.

The ratio of the first physical quantity (physical quantity A) relative to the second physical quantity (physical quantity B) is defined as a value obtained by dividing B by A (i.e., B/A) or a value obtained by dividing A by B (i.e., A/B). The ratio of the physical quantity A and the physical quantity B is defined to be a value obtained by dividing physical quantity B by the physical quantity A, or a value obtained by dividing the physical quantity A by the physical quantity B.

In those circumstances, even when there is a possibility that the ingress of the water to the gas piping may occur because of the deterioration (aging degradation) of the gas piping and plumbing or even when the ingress of the water from melting snow during the springtime or the rainwater in rainy season occurs, the control portion (100X) can determine the appropriate remaining lifetime of the desulfurizer (100, 200) and can accurately determine the maintenance timing of the desulfurizer compared to a case where the determination is made only on the basis of the first physical quantity (physical quantity A) related to the cumulative operation time of the fuel cell system. The value obtained based on dividing B by A (i.e., B/A) and the value obtained based on dividing A by B (i.e., A/B) may be added with a correction factor, or a correction coefficient.

The control portion (100X) obtains the remaining lifetime of the desulfurizer from the sum of the remaining lifetime (αsum) of the desulfurizer from the reference timing on the basis of the information value related to the ratio of the first physical quantity (physical quantity A) and the second physical quantity (physical quantity B) related to the cumulative operation time (i.e., the value obtained based on B/A, or the value obtained based on A/B). Then, in a case where the end of the remaining lifetime of the desulfurizer is earlier than the timing of the next routine maintenance of the fuel cell system, the control portion (100X) outputs the maintenance information for conducting the maintenance of the desulfurizer. On the other hand, in a case where the end of the remaining lifetime of the desulfurizer is later than the timing of the next routine maintenance of the fuel cell system, the control portion (100X) does not output the maintenance information and outputs a signal allowing the desulfurizer to operate. The cumulative operation time may serve as the first physical quantity (physical quantity A) and the second physical quantity (physical quantity B). Alternatively, the flow, or flowing amount of the source gas which is supplied to the desulfurizer during the cumulative operation time may serve as the first physical quantity (physical quantity A) and the second physical quantity (physical quantity B). The ratio itself or a value considering a correction factor (correction coefficient) to the ratio may serve as the information value related to the ratio.

In a case where the maintenance (including the replacement and the regeneration) of the desulfurizer (desulfurization agent) is performed, the reset element (reset switch 106) is operated either manually or automatically, and, for example, the reference timing, the first and the second physical quantities (physical quantities A and B), and the cumulative operation time are reset for the new desulfurizer (desulfurization agent).

By flowing (introducing) the source gas from the first desulfurizer (100) which is installed at the high temperature environment to the second desulfurizer (200) which is installed at the low temperature environment, the heat of the source gas which passes through the first desulfurizer (100) is received by and radiated at the second desulfurizer (200). Thus, the temperature of the source gas flowing into the flow meter (300) which is susceptible to be affected by the heat can be declined as much as possible. In those circumstances, the problem of thermal resistance for the flow meter can be resolved. Accordingly, even if the heat retention capacity of the source gas which passes through the first desulfurizer (100) is high, the temperature of the source gas can be lowered sufficiently by the heat radiation at the second desulfurizer (200).

In those circumstances, the dew point of the source gas is high dew point or middle dew point, for example, at the first half of the total cumulative operation time (αtotal). Even if the desulfurization capacity of the desulfurization agent Is declined during the first half of the total cumulative operation time (αtotal), provided that the dew point of the source gas is assumed to be the low level thereafter, it is expected that the desulfurization function of the desulfurization agent is recovered thereafter. Accordingly, the control portion modifies, or corrects the remaining lifetime of the desulfurization agent to be longer. For example, adding the adjusted lifetime (correction lifetime) or multiplying correction coefficient (correction factor) may be adopted as the modification, or the correction of the remaining lifetime.

According to the disclosure, the control portion obtains the first physical quantity related to the cumulative operation time of the fuel cell system from the reference timing, and the second physical quantity the cumulative operation time during which the source gas having a dew point equal to or higher than the predetermined level or having the humidity equal to or higher than the predetermined level is supplied to the desulfurizer via the source gas passage from the reference timing. Then, the control portion Informs the maintenance information related to the maintenance (including the regeneration, replacement), for example, the replacement of the desulfurizer (desulfurization agent). Thus, even when there is a possibility that the ingress of the water to the gas piping occurs because of the deterioration (aging degradation) of the gas piping and plumbing or that the ingress of the water from melting snow during the springtime or the rainwater in rainy season occurs, compared to the case where the determination of the remaining lifetime only based on the first physical quantity related to the cumulative operation time of the fuel cell system from the reference timing, the control portion can favorably inform the maintenance information related to the maintenance for the desulfurizer, determines the appropriate remaining lifetime of the desulfurizer, and determines an appropriate maintenance timing of the desulfurizer (desulfurization agent). A fuel cell system Includes a fuel cell (1), a reformer (2A), a source gas passage (6), a gas conveying source (60), a desulfurizer (100, 200), a sensor (510) detecting a physical quantity related to a dew point or a humidity of the source gas supplied to the desulfurizer, and a control portion (100X) informing maintenance information related to a maintenance of the desulfurizer on the basis of a first physical quantity (A, A1, A2) related to a cumulative operation time for the fuel cell system from a reference timing and a second physical quantity (B, B1, B2) related to a cumulative operation time from the reference timing during which the source gas having a dew point equal to or higher than a predetermined level or having a humidity equal to or higher than a predetermined level is supplied via the source gas passage, where the first physical quantity and the second physical quantity have physical quantities of the same unit.

## Claims

1. A fuel cell system, comprising:
a fuel cell (**1**) including an anode (**10**) to which an anode gas is supplied and a cathode (**11**) to which a cathode gas is supplied;
a reformer (**2A**) for forming the anode gas by reforming a source gas;
a source gas passage (**6**) for supplying the source gas to the reformer (**2A**);
a gas conveying source (**60**) provided at the source gas passage (**6**) and supplying the source gas to the reformer (**2A**) via the source gas passage (**6**);
a desulfurizer (**100**, **200**) provided at the source gas passage (**6**) for desulfurizing the source gas; and
a sensor (**510**) detecting a physical quantity related to a dew point or a humidity of the source gas supplied to the desulfurizer (**100**, **200**),
**characterized by**
a control portion (**100X**), which is configured to obtain a remaining lifetime of the desulfurizer (**100**, **200**) on the basis of an information value indicating a ratio of a first physical quantity (**A**, **A1, A2**) detected by the sensor (**510**) to a second physical quantity (**B**, **B1, B2**) detected by the sensor (**510**) or a ratio of the second physical quantity (**B**, **B1, B2**) to the first physical quantity (**A**, **A1, A2**), and to output maintenance information for conducting a maintenance of the desulfurizer (**100**, **200**) when an end of the obtained remaining lifetime of the desulfurizer (**100**, **200**) is earlier than a preset timing of next routine maintenance,
wherein the first physical quantity (**A**, **A1, A2**) relates to a cumulative operation time of the fuel cell system from a reference timing, and the second physical quantity (**B**, **B1, B2)** relates to a cumulative operation time from the reference timing during which the source gas having a dew point equal to or higher than a predetermined level or having a humidity equal to or higher than a predetermined level is supplied via the source gas passage (**6**), and
wherein the first physical quantity (**A**, **A1, A2**) and the second physical quantity (**B**, **B1, B2)** have physical quantities of the same unit.

2. The fuel cell system according to claim 1, wherein the control portion **(100X)** outputs a signal for allowing operation when the end of the remaining life of the desulfurizer (**100**, **200**) is later than the timing of next routine maintenance on the basis of the information value indicating a ratio of the first physical quantity (**A**, **A1, A2**) to the second physical quantity (**B**, **B1, B2)** or a ratio of the second physical quantity (**B**, **B1, B2)** to the first physical quantity (**A**, **A1, A2**).

3. The fuel cell system according to either claim 1 or 2, further comprising:
a reset element (**106**) resetting the reference timing, the first physical quantity, and the second physical quantity.

4. The fuel cell system according to claim 1, wherein the reference timing corresponds to a timing when the fuel cell system is installed, a timing for start computing a cumulative flow of the source gas flowing in the source gas passage (**6**), or a timing which is estimated to be substantially a timing for start computing.

5. The fuel cell system according to claim 1, wherein the cumulative operation time (**αtotal**) corresponds to a cumulative time during which the source gas is supplied to the desulfurizer (**100**, **200**), which includes an activation time of the fuel cell system and a power generating time by the fuel cell system and does not include a stand-by time during which the source gas is not supplied to the desulfurizer (**100**, **200**).

6. The fuel cell system according to any one of claims 1 to 5, wherein
the desulfurizer (**100**, **200**) includes a first desulfurizer (**100**) which is positioned in an environment having relatively high temperature and a second desulfurizer (**20**0) which is positioned in an environment having relatively low temperature compared to the first desulfurizer (**100**); and wherein
the first desulfurizer (**100**), the second desulfurizer (**200**), and a flow meter (**300**) are arranged at the source gas passage (**6**) in the mentioned order.

7. The fuel cell system according to any one of claims 1 to 6, wherein the control portion **(100X)** corrects a remaining lifetime of a desulfurization agent contained in the desulfurizer (**100**, **200**) in accordance with a timing that the source gas having the dew point equal to or higher than the predetermined level flows during the cumulative operation time (**αtotal**) of the system.

## Patentansprüche

1. Brennstoffzellensystem, mit:
einer Brennstoffzelle (**1**) umfassend eine Anode (**10**), an die ein Anodengas zugeführt wird, und eine Kathode (**11**), an die ein Kathodengas zugeführt wird;
einem Reformer (**2A**) zum Bilden des Anodengases durch reformieren eines Basisgases;
einer Basisgaspassage (**6**) zum Zuführen des Basisgases zu dem Reformer (**2A**);
einer Gasbeförderungsquelle (**60**), die an der Basisgaspassage (**6**) bereitgestellt ist und das Basisgas dem Reformer (**2A**) über die Basisgaspassage (**6**) zuführt;
einer Entschwefelungseinrichtung (**100**, **200**), die an der Basisgaspassage (**6**) zum Entschwefeln des Basisgases bereitgestellt ist; und
einem Sensor (**510**), der eine physikalische Größe bezüglich eines Taupunktes oder einem Feuchtigkeitsgehalt des zu der Entschwefelungseinrichtung (**100**, **200**) zugeführten Basisgases erfasst,
**gekennzeichnet durch**
einen Steuerungsabschnitt (**100X**), der konfiguriert ist, um eine verbleibende Lebensdauer der Entschwefelungseinrichtung (**100**, **200**) auf der Grundlage eines Informationswerts, der ein Verhältnis einer ersten **durch** den Sensor erfassten physikalischen Größe (**A**, **A1, A2**) zu einer zweiten durch den Sensor erfassten physikalischen Größe (**B**, **B1, B2**), oder ein Verhältnis der zweiten physikalischen Größe (**B**, **B1, B2**) zu der ersten physikalischen Größe (**A**, **A1, A2**) angibt, zu erhalten, und um Wartungsinformationen zum Ausführen einer Wartung der Entschwefelungseinrichtung (**100**, **200**) auszugeben, wenn ein Ende der erhaltenen verbleibenden Lebensdauer der Entschwefelungseinrichtung (**100**, **200**) früher auftritt als ein voreingestellter Zeitpunkt der nächsten Routinewartung,
wobei sich die erste physikalische Größe (**A**, **A1, A2**) auf eine kumulative Betriebszeit des Brennstoffzellensystems von einem Referenzzeitpunkt bezieht, und sich die zweite physikalische Größe (**B**, **B1, B2**) auf eine kumulative Betriebszeit von einem Referenzzeitpunkt, während der das Basisgas mit einem Taupunkt größer oder gleich eines vorbestimmten Niveaus oder mit einem Feuchtigkeitsgehalt größer oder gleich eines vorbestimmten Niveaus über die Basisgaszufuhrpassage (**6**) zugeführt wird, bezieht, und
wobei die erste physikalische Größe (**A**, **A1, A2**) und die zweite physikalische Größe (**B**, **B1, B2**) physikalische Größen mit der gleichen Einheit sind.

2. Brennstoffzellensystem gemäß Anspruch 1, wobei der Steuerungsabschnitt (**100X**) ein Signal zum Zulassen eines Betriebs ausgibt, wenn das Ende der verbleibenden Lebensdauer der Entschwefelungseinrichtung (**100, 200**) später ist als der Zeitpunkt einer nächsten Routinewartung, auf der Grundlage des Informationswerts, der ein Verhältnis der ersten physikalischen Größe (**A**, **A1, A2**) zur zweiten physikalischen Größe (**B**, **B1, B2**) oder ein Verhältnis von der zweiten physikalischen Größe (**B**, **B1, B2**) zur ersten physikalischen Größe (**A**, **A1, A2**) angibt.

3. Brennstoffzellensystem gemäß Anspruch 1 oder 2, weiterhin mit:
einem Zurücksetzelement (**106**), das den Referenzzeitpunkt, die erste physikalische Größe und die zweite physikalische Größe zurücksetzt.

4. Brennstoffzellensystem gemäß Anspruch 1, wobei der Referenzzeitpunkt einem Zeitpunkt, wenn das Brennstoffzellensystem installiert wird, einem Zeitpunkt zum Starten einer Berechnung eines kumulativen Durchflusses des in die Basisgaspassage (**6**) strömenden Basisgases, oder einem Zeitpunkt, der abgeschätzt wird, im Wesentlichen gleich einem Zeitpunkt zum Starten einer Berechnung zu sein, entspricht.

5. Brennstoffzellensystem gemäß Anspruch 1, wobei die kumulative Betriebszeit **(αtotal)** einer kumulativen Zeit, während der das Basisgas der Entschwefelungseinrichtung (**100**, **200**) zugeführt wird, entspricht, die einen Aktivierungszeitpunkt des Brennstoffzellensystems und eine Energieerzeugungszeit durch das Brennstoffzellensystem umfasst, und eine Bereitschaftszeit, während der das Basisgas der Entschwefelungseinrichtung (**100**, **200**) nicht zugeführt wird, nicht umfasst.

6. Brennstoffzellensystem gemäß einem der Ansprüche 1 bis 5, wobei
die Entschwefelungseinrichtung (**100**, **200**) eine erste Entschwefelungseinrichtung (**100**), die sich in einer Umgebung mit relativ hoher Temperatur befindet, und eine zweite Entschwefelungseinrichtung (**200**), die sich in einer Umgebung mit relativ niedriger Temperatur als im Vergleich mit der ersten Entschwefelungseinrichtung (**100**) befindet, umfasst; und wobei
die erste Entschwefelungseinrichtung (**100**), die zweite Entschwefelungseinrichtung (**200**) und ein Durchflussmesser (**300**) an der Basisgaspassage (**6**) in der genannten Reihenfolge angeordnet sind.

7. Brennstoffzellensystem gemäß einem der Ansprüche 1 bis 6, wobei der Steuerungsabschnitt (**100X**) eine verbleibende Lebensdauer eines in der Entschwefelungseinrichtung (**100**, **200**) enthaltenen Entschwefelungsstoffes gemäß einem Zeitpunkt, bei dem das Basisgas mit dem Taupunkt größer oder gleich dem vorbestimmten Niveau während der kumulativen Betriebszeit **(αtotal)** des Systems strömt, korrigiert.

## Revendications

1. Système de pile à combustible, comprenant :
une pile à combustible (1) incluant une anode (10) à laquelle un gaz d'anode est apporté, et une cathode (11) à laquelle un gaz de cathode est apporté ;
un réformeur (2A) pour former le gaz d'anode en réformant un gaz source ;
un passage de gaz source (6) pour apporter le gaz source au réformeur (2A) ;
une source d'acheminement de gaz (60) prévue au niveau du passage de gaz source (6) et apportant le gaz source au réformeur (2A) via le passage de gaz source (6) ;
une unité de désulfuration (100, 200) prévue au niveau du passage de gaz source (6) pour désulfurer le gaz source ; et
un capteur (510) détectant une quantité physique en rapport avec un point de rosée ou une humidité du gaz source apporté à l'unité de désulfuration (100, 200),
**caractérisé par**
une partie de régulation (100X) qui est configurée pour obtenir un temps de séjour résiduel de l'unité de désulfuration (100, 200) sur la base d'une valeur informative indiquant une proportion d'une première quantité physique (A, A1, A2) détectée par le capteur (510) par rapport à une seconde quantité physique (B, B1, B2) détectée par le capteur (510) ou une proportion de la seconde quantité physique (B, B1, B2) par rapport à la première quantité physique (A, A1, A2), et pour sortir une information de maintenance pour réaliser une maintenance de l'unité de désulfuration (100, 200) lorsqu'une fin de temps de séjour résiduel obtenue de l'unité de désulfuration (100, 200) est antérieure à un moment prédéterminé de la maintenance de routine suivante,
dans lequel la première quantité physique (A, A1, A2) se rapporte à une durée de fonctionnement cumulée du système de pile à combustible d'un moment de référence, et la seconde quantité physique (B, B1, B2) se rapporte à une durée de fonctionnement cumulée du moment de référence pendant lequel le gaz source présentant un point de rosée égal ou supérieur à un niveau prédéterminé ou présentant une humidité égale ou supérieure à un niveau prédéterminé est apporté via le passage de gaz source (6), et
dans lequel la première quantité physique (A, A1, A2) et la seconde quantité physique (B, B1, B2) présentent des quantités physiques de la même unité.

2. Système de pile à combustible selon la revendication 1, dans lequel la partie de régulation (100X) sort un signal pour permettre un fonctionnement lorsque la fin de temps de séjour résiduel de l'unité de désulfuration (100, 200) est postérieure au moment de la maintenance de routine suivant sur la base de la valeur informative indiquant une proportion de la première quantité physique (A, A1, A2) par rapport à la seconde quantité physique (B, B1, B2) ou une proportion de la seconde quantité physique (B, B1, B2) par rapport à la première quantité physique (A, A1, A2).

3. Système de pile à combustible selon l'une des revendications 1 ou 2, comprenant en outre :
un élément de réinitialisation (106) réinitialisant le moment de référence, la première quantité physique et la seconde quantité physique.

4. Système de pile à combustible selon la revendication 1, dans lequel le moment de référence correspond à un moment où le système de pile à combustible est installé, un moment pour commencer à calculer un flux cumulé du gaz source s'écoulant à travers le passage de gaz source (6), ou un moment qui est estimé être sensiblement un moment pour commencer à calculer.

5. Système de pile à combustible selon la revendication 1, dans lequel la durée de fonctionnement cumulée (αtotal) correspond à une durée cumulée pendant laquelle le gaz source est apporté à l'unité de désulfuration (100, 200), qui inclut une durée d'activation du système de pile à combustible et une durée de production d'énergie par le système de pile à combustible et n'inclut pas une durée d'attente pendant laquelle le gaz source n'est pas apporté à l'unité de désulfuration (100, 200).

6. Système de pile à combustible selon l'une quelconque des revendications 1 à 5, dans lequel
l'unité de désulfuration (100, 200) inclut une première unité de désulfuration (100) qui est positionnée dans un environnement présentant une température relativement élevée et une seconde unité de désulfuration (200) qui est positionnée dans un environnement présentant une température relativement basse comparée à la première unité de désulfuration (100) ; et
la première unité de désulfuration (100), la seconde unité de désulfuration (200) et un débitmètre (300) sont agencés au niveau du passage de gaz source (6) dans l'ordre indiqué.

7. Système de pile à combustible selon l'une quelconque des revendications 1 à 6, dans lequel la partie de régulation (100X) corrige un temps de séjour résiduel d'un agent de désulfuration contenu dans l'unité de désulfuration (100, 200) en fonction d'un moment où le gaz source présentant le point de rosée égal ou supérieur au niveau prédéterminé s'écoule pendant la durée de fonctionnement cumulée (αtotal) du système.
